# EUROPEAN PATENT SPECIFICATION

(11) **EP 2 928 090 B1**
(45) Date of publication and mention of the grant of the patent: **14.03.2018**
(21) Application number: 12890209.5
(22) Date of filing: 17.12.2012
(51) Int. Cl.: H04J 14/02, H04Q 11/00

(54) **OPTICAL NETWORK ELEMENT, ELECTRIC NETWORK ELEMENT AND SIGNALING ESTABLISHMENT METHOD WHEN ELECTRIC RELAY IS IN ELECTRIC NETWORK ELEMENT**
OPTISCHES NETZWERKELEMENT, ELEKTRISCHES NETZWERKELEMENT UND SIGNALISIERUNGSHERSTELLUNGSVERFAHREN BEI ELEKTRISCHEM RELAIS IM ELEKTRISCHEN NETZWERKELEMENT
ÉLÉMENT DE RÉSEAU OPTIQUE, ÉLÉMENT DE RÉSEAU ÉLECTRIQUE ET PROCÉDÉ D'ÉTABLISSEMENT DE SIGNALISATION LORSQU'UN RELAIS ÉLECTRIQUE EST DANS UN ÉLÉMENT DE RÉSEAU ÉLECTRIQUE

(43) Date of publication of application: 07.10.2015
(73) Proprietor: Huawei Technologies Co., Ltd., Longgang District Shenzhen, Guangdong 518129 (CN)
(72) Inventor: ZHAO, Min, Shenzhen Guangdong 518129 (CN); CHEN, Chunhui, Shenzhen Guangdong 518129 (CN); FAN, Minghui, Shenzhen Guangdong 518129 (CN)
(74) Representative: Epping - Hermann - Fischer
(86) International application number: PCT/CN2012/086771
(87) International publication number: WO 2014/094209

(56) References cited:
- WO-A1-2011/085823
- CN-A- 1 529 429
- CN-A- 1 555 165
- CN-A- 1 567 803
- GB-A- 2 359 433
- US-B1- 7 352 973

## Description

### TECHNICAL FIELD

The present invention belongs to the communications field, and in particular, to a signaling establishment method when an electrical regenerator is on an electrical network element, an optical network element, and an electrical network element.

### BACKGROUND

After an optical signal is transmitted on a wavelength optical channel (Optical channel, OCH) path for a distance, one or more factors that affect system transmission performance, such as dispersion of the optical signal, optical noise, non-linear effect, or polarization mode dispersion (Polarization Mode Dispersion, PMD), constrain the optical signal from continuing to be transmitted, and an electrical regenerator is needed to implement regeneration, so as to complete a process of shaping, retiming, and regenerating the signal, thereby improving quality of the optical signal.

There are a relatively large number of boards in an optical network element, which include boards of a wavelength conversion type, a line type, an optical multiplexing or demultiplexing type, an add/drop multiplexing type, an optical fiber amplifier type, an optical supervisory channel type, a spectrum analysis type, a variable optical attenuation type, an optical power and dispersion balancing type, an optical protection type, and the like. In addition, some boards need to occupy several slots, and slots in one subrack are limited; therefore, it is impossible to place all boards of an optical network element in a same subrack, but to distribute them into multiple subracks. In a current master/slave subrack mode, one network element has a limited capacity for subrack management. When an electrical regenerator is placed on an electrical network element, a path loop LOOP occurs at a signaling level and at a route level. A reason for the occurrence of the path loop LOOP is that when the electrical regenerator is placed on the electrical network element, signaling and routing carry regeneration information, and a loop occurs.

WO 2011/085823 A1 discloses that a routing traffic across a network having an optical layer and an electrical layer, involves using a common topology representing the optical and electrical layers of the network. The common topology is such that an individual port of a respective optical device in the optical layer is represented as corresponding virtual nodes, coupled by virtual links, in the common topology together with a representation of nodes and links of the electrical layer. The routing path in terms of the common topology is mapped back into a routing path through the actual optical devices of the optical layer. the handling of colour (including wavelength assignment, wavelength continuity and colour selection where it is tunable/selectable) and direction constraints is moved to the preliminary step of creating the common topology.

US 7352 973 B1 discloses a method for adding a new wavelength to an optical communication network is provided. One step of the method includes installing a transmitter component in a transmitter node of the optical communication network. Another step includes installing a receiver component in a receiver node of the optical communication network. For each of a plurality of regenerator nodes in the optical communication network, the method includes the steps of determining whether the quality of optical signals for the new wavelength at the particular regenerator node satisfies a performance threshold, installing an optical regenerator component in the regenerator node for regenerating the optical signals if the quality of the optical signals at the regenerator node satisfies the performance threshold, and installing optical-to-electrical-to-optical regenerator components if the quality of the optical signals at the regenerator node does not satisfy the performance threshold.

GB 2359433A discloses a regenerative interface for an optical communication system, the system comprising a plurality of mutually interconnected bi-directional optical waveguide rings in which radiation modulated with communication traffic propagates. The radiation is partitioned into distinct wavebands. The interfaces are included in the system where communication traffic propagating in the rings transfers from one ring to another. Each interface is capable of providing an all-optical waveband reconfigurable communication link between the rings. At each interface, conversion of optical radiation to corresponding electrical signals only is performed for regeneration when transferring communication traffic from one ring to another, otherwise the system handles the communication traffic in the optical domain thereby providing a potentially larger communication bandwidth compared to conventional optical communication systems. Radiation diverted between rings may be regenerated.

### SUMMARY

A purpose of embodiments of the present invention is to provide an implementation method when an electrical regenerator is on an electrical network element on a wavelength switched optical network WSON network, where the method resolves a problem that when the electrical regenerator is on the electrical network element, a path loop occurs on signaling and routing. According to the present invention, signaling establishment methods and devices as defined in the attached claims are disclosed.

Compared with the prior art, embodiments of the present invention provide a signaling establishment method when an electrical regenerator is on an electrical network element. According to the method, a property of a fifth interface is mapped to a property of a third interface, and all optical network elements on an optical network on which the optical network element is located is informed, by means of routing flooding, of the property of the third interface, so that the optical network element establishes a local wavelength connection for the optical network element according to signaling; and the optical network element delivers a message, so that the electrical network element establishes a local wavelength connection for the electrical network element according to the message, thereby implement that a wavelength switched path that goes through the electrical regenerator is established when an electrical regenerator is on an electrical network element.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a signaling establishment method when an electrical regenerator is on an electrical network element according to Embodiment 1 of the present invention;
FIG. 2 is a schematic diagram of a signaling establishment method when an electrical regenerator is on an electrical network element according to an embodiment of the present invention;
FIG. 3 is a schematic diagram of signaling HOP information according to an embodiment of the present invention;
FIG. 4 is a schematic diagram of communications messages of an optical electrical network element according to an embodiment of the present invention;
FIG. 5 is a flowchart of a signaling establishment method when an electrical regenerator is on an electrical network element according to Embodiment 2 of the present invention;
FIG. 6 is a flowchart of a signaling establishment method when an electrical regenerator is on an electrical network element according to Embodiment 3 of the present invention;
FIG. 7 is a structural diagram of an optical network element apparatus according to Embodiment 4 of the present invention;
FIG. 8 is a structural diagram of an optical network element apparatus according to Embodiment 4 of the present invention;
FIG. 9 is a structural diagram of an optical network element apparatus according to Embodiment 4 of the present invention;
FIG. 10 is a structural diagram of an electrical network element apparatus according to Embodiment 5 of the present invention;
FIG. 11 is a structural diagram of an electrical network element apparatus according to Embodiment 5 of the present invention;
FIG. 12 is a structural diagram of an optical network element apparatus according to Embodiment 6 of the present invention; and
FIG. 13 is a structural diagram of an electrical network element apparatus according to Embodiment 7 of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

The foregoing descriptions are merely exemplary embodiments of the present invention, but are not intended to limit the present invention. Any modification, equivalent replacement, and improvement made without departing from the principle of the present invention shall fall within the protection scope of the present invention.

### Embodiment 1

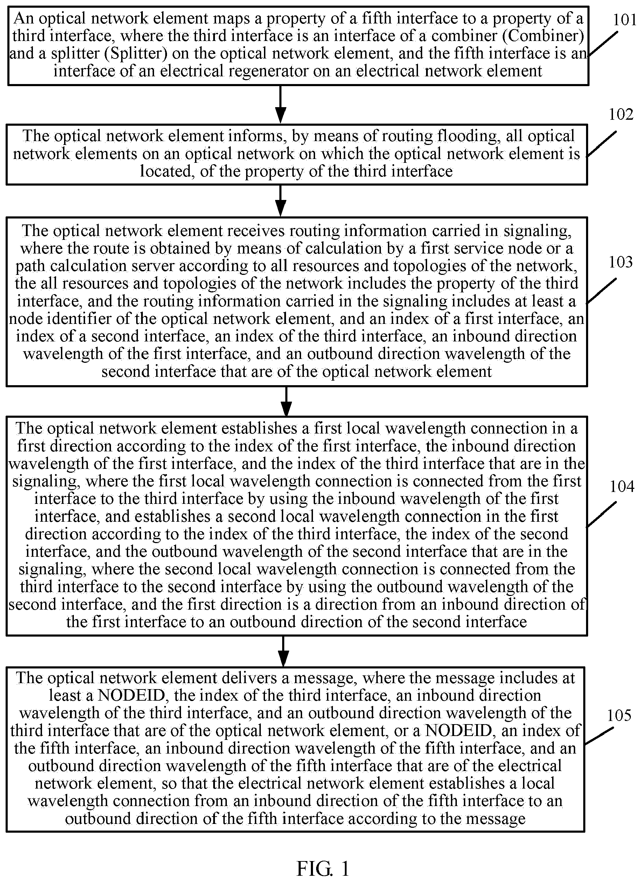

FIG. 1 is a flowchart of a signaling establishment method when an electrical regenerator is on an electrical network element according to Embodiment 1 of the present invention, and the method includes the following steps:
Step 101: An optical network element maps a property of a fifth interface to a property of a third interface, where the third interface is an interface of a combiner (Combiner) and a splitter (Splitter) on the optical network element, and the fifth interface is an interface of an electrical regenerator on an electrical network element.

It is implementable that the mapping, by the optical network element, a property of a fifth interface to a property of a third interface includes:
configuring, by the optical network element, the fifth interface as a remote interface of the third interface, or automatically discovering, by using the Link Management Protocol (Link Management Protocol, LMP), that the fifth interface is a remote interface of the third interface;
receiving, by the optical network element, the property of the fifth interface that is sent by the electrical network element by using the LMP protocol; and
mapping, by the optical network element, the property of the fifth interface to the property of the third interface.

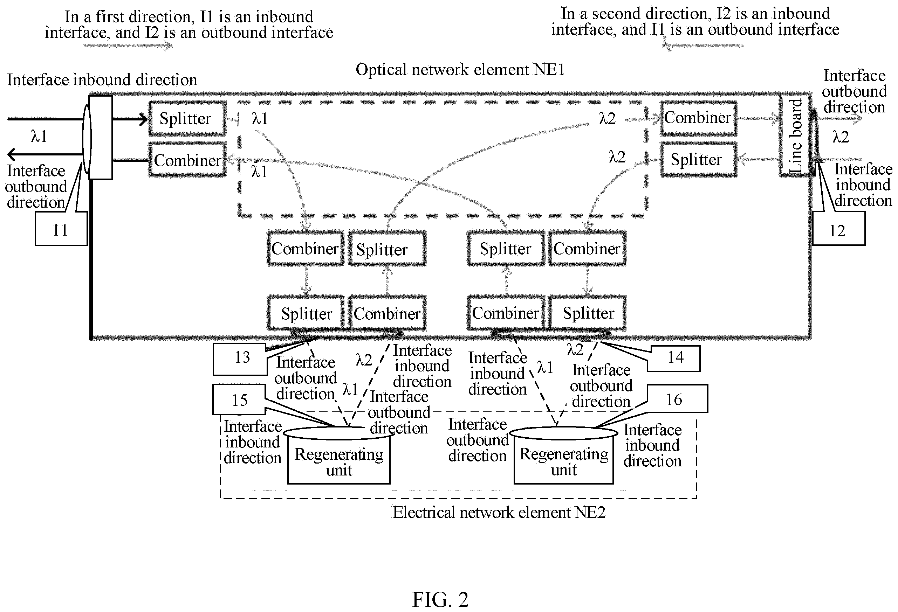

Specifically, the optical network element configures the fifth interface as the remote interface of the third interface or automatically discovers, by using the Link Management Protocol, that the fifth interface is the remote interface of the third interface. As shown in FIG. 2, the third interface and a fourth interface are interfaces of the optical network element NE1 on combiners and splitters, and the fifth interface and a sixth interface are interfaces of the electrical regenerator on the electrical network element NE2; the optical network element manually configures the fifth interface as the remote interface of the third interface and the sixth interface as a remote interface of the fourth interface, or automatically discovers, by using the Link Management Protocol LMP protocol, that the fifth interface is the remote interface of the third interface, and the sixth interface is the remote interface of the fourth interface.

It is implementable that the property includes:
link-supported wavelength capacity, resource bandwidth information, link state, and optical damage.

Step 102: The optical network element informs, by means of routing flooding, all optical network elements on an optical network on which the optical network element is located, of the property of the third interface.

Specifically, the optical network element maps the property of the fifth interface and the property of the sixth interface to the third interface and the fourth interface by using an extended LMP protocol or a proprietary protocol, and floods, by using routing, the property of the third interface and the property of the fourth interface to all optical network elements on an automatically switched optical network (Automatically Switched Optical Network, ASON) of the network on which the optical network element is located.

Step 103: The optical network element receives routing information carried in signaling, where the route is obtained by means of computation by a first service node or a route computation server according to all resources and topologies of the network, the all resources and topologies of the network include the property of the third interface, and the routing information carried in the signaling includes at least a node identifier, an index of a first interface, an index of a second interface, an index of the third interface, an inbound direction wavelength of the first interface, and an outbound direction wavelength of the second interface that are of the optical network element.

Specifically, for a wavelength switched path that goes through the electrical regenerator, an ERO object in the signaling protocol RSVP is extended, so as to carry information about the remote interfaces, where the information about the remote interfaces is the interface index of the third interface and the interface index of the fourth interface.

Specifically, the extended signaling includes the node identifier NE1 of the optical network element A and I1, I2, λ1, λ2, and I3 and/or I4 that are of the optical network element. Specifically, when the optical network element floods the property of the third interface and the property of the fourth interface to all the optical network elements on the network on which the optical network element is located, the first service node computes, according to the all resources and topologies of the network, the wavelength path when the optical network element NE1 goes through the electrical regenerator on the electrical network element NE2.

Specifically, the optical network element extends the explicit route object (EXPLICIT_ROUTE OBJECT, ERO) in the Resource Reservation Protocol (ReSource reservation Protocol, RSVP), so that an extended ERO object carries I3, the index of the third interface of the optical network element in a first direction.

When a service in the first direction is established, the first interface I1 in the first direction is an inbound interface in the first direction, the second interface I2 in the first direction is an outbound interface in the first direction, λ1 is an inbound direction wavelength in the first direction, and λ2 is an outbound direction wavelength in the first direction.

Step 104: The optical network element establishes a first local wavelength connection in a first direction according to the index of the first interface, the inbound direction wavelength of the first interface, and the index of the third interface that are in the signaling, where the first local wavelength connection is connected from the first interface to the third interface by using the inbound wavelength of the first interface, and establishes a second local wavelength connection in the first direction according to the index of the third interface, the index of the second interface, and the outbound wavelength of the second interface that are in the signaling, where the second local wavelength connection is connected from the third interface to the second interface by using the outbound wavelength of the second interface, and the first direction is a direction from an inbound direction of the first interface to an outbound direction of the second interface.

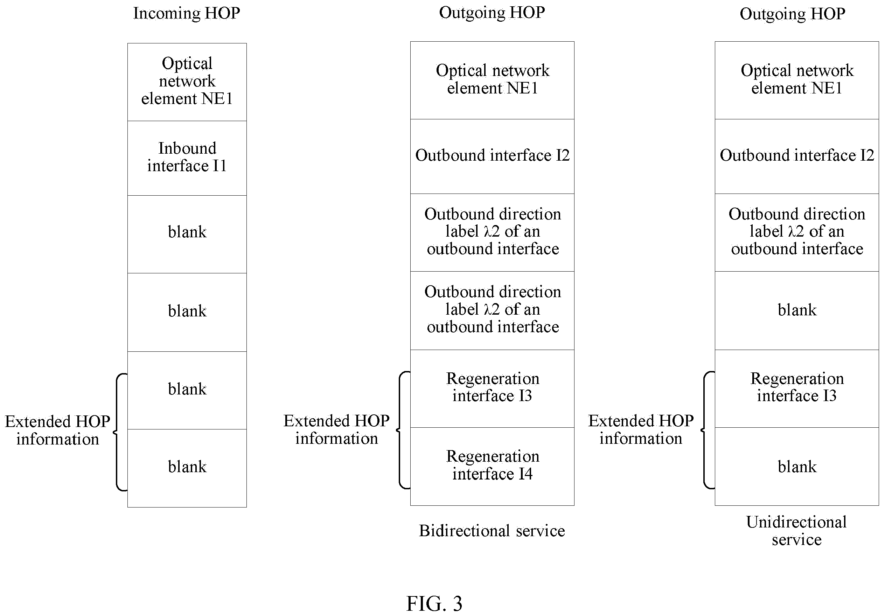

Specifically, referring to FIG. 3, the first direction is used as an example. For convenience of description, the first local wavelength connection in the first direction is (I1, λ1) -> (I3, λ1), and the second local connection in the first direction is (I3, λ2) -> (I2, λ2).

Step 105: The optical network element delivers a message, where the message includes at least the NODEID, the index of the third interface, an inbound direction wavelength of the third interface, and an outbound direction wavelength of the third interface that are of the optical network element, or a NODEID, an index of the fifth interface, an inbound direction wavelength of the fifth interface, and an outbound direction wavelength of the fifth interface that are of the electrical network element, so that the electrical network element establishes a local wavelength connection from an inbound direction of the fifth interface to an outbound direction of the fifth interface according to the message.

It is implementable that the optical network element acquires the NODEID of the electrical network element according to the remote interface of the third interface, that is, the fifth interface;
a C-Type is added by extending a C-Type of an ERROR_SPEC object in a NOTIFY message in the RSVP protocol; and
the message is delivered to the electrical network element.

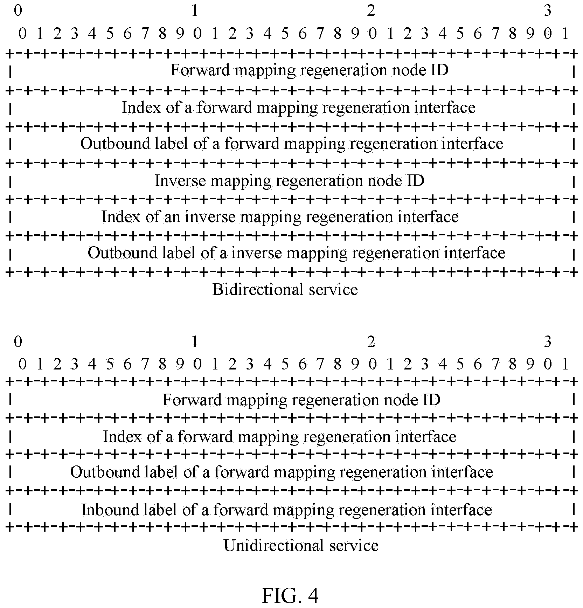

Specifically, for a format of an assembled message, refer to FIG. 4. A forward mapping regeneration node ID is the NODEID of the optical network element, an index of a forward mapping regeneration interface is the interface index of the third interface of the optical network element, an outgoing label of the forward mapping regeneration interface is the outbound direction wavelength λ1 of the third interface, and an incoming label of the forward mapping regeneration interface is the inbound direction wavelength λ2 of the third interface.

Specifically, the local wavelength connection of electrical network element in the first direction is used as an example, and the local wavelength connection of electrical network element in the first direction is (I5, λ1) -> (I5, λ2).

This embodiment of the present invention provides a signaling establishment method when an electrical regenerator is on an electrical network element. According to the method, a property of a fifth interface is mapped to a property of a third interface, and all optical network elements on an optical network on which the optical network element is located is informed, by means of routing flooding, of the property of the third interface, so that the optical network element establishes a local wavelength connection for the optical network element according to signaling; and the optical network element delivers a message, so that the electrical network element establishes a local wavelength connection for the electrical network element according to the message, thereby implementing that a wavelength switched path that goes through an electrical regenerator is established when the electrical regenerator is on an electrical network element.

### Embodiment 2

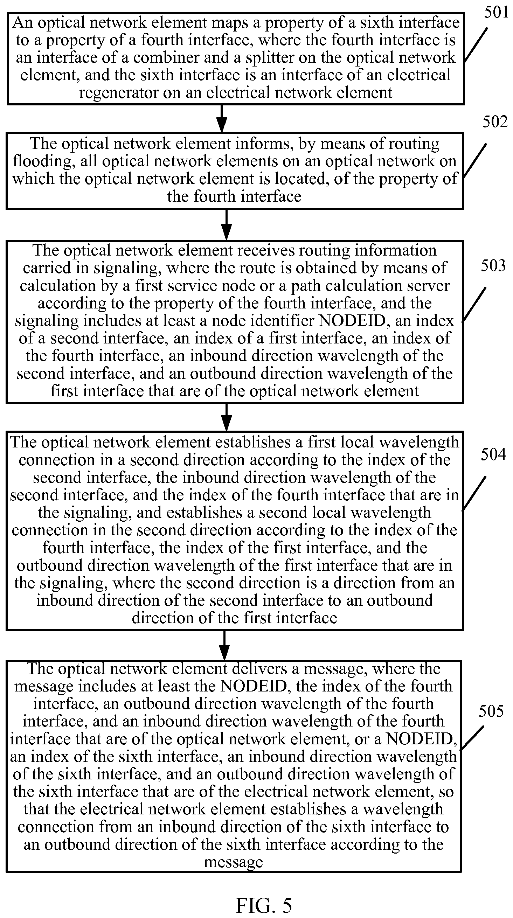

FIG. 5 is a flowchart of a signaling establishment method when an electrical regenerator is on an electrical network element according to Embodiment 2 of the present invention, and the method includes the following steps:
Step 501: An optical network element maps a property of a sixth interface to a property of a fourth interface, where the fourth interface is an interface of a combiner and a splitter on the optical network element, and the sixth interface is an interface of an electrical regenerator on an electrical network element.

It is implementable that, that an optical network element maps a property of a sixth interface to a property of a fourth interface includes the following:
the optical network element configures the sixth interface as a remote interface of the fourth interface, or automatically discovers, by using the Link Management Protocol, that the sixth interface is a remote interface of the fourth interface;
the optical network element receives the property of the fourth interface that is sent by the electrical network element by using the LMP protocol; and
the optical network element maps the property of the sixth interface to the property of the fourth interface.

Specifically, the optical network element configures or automatically discovers, by using the Link Management Protocol, that the sixth interface is the remote interface of the fourth interface. As shown in FIG. 2, a third interface and the fourth interface are interfaces of the optical network element NE1 on combiners and splitters, and a fifth interface and the sixth interface are interfaces of the electrical regenerator on the electrical network element NE2; the optical network element manually configures or automatically discovers, by using the Link Management Protocol LMP protocol, that the fifth interface is a remote interface of the third interface, and the sixth interface is the remote interface of the fourth interface.

It is implementable that the property includes:
link-supported wavelength capacity, resource bandwidth information, link state, and optical damage.

Step 502: The optical network element informs, by means of routing flooding, all optical network elements on an optical network on which the optical network element is located, of the property of the fourth interface.

Specifically, the optical network element maps the property of the fifth interface and the property of the sixth interface to the third interface and the fourth interface by using an extended LMP protocol or a proprietary protocol, and floods, by using routing, the property of the third interface and the property of the fourth interface to all optical network elements on an automatically switched optical network (Automatically Switched Optical Network, ASON) of the network on which the optical network element is located.

Step 503: The optical network element receives routing information carried in signaling, where the route is obtained by means of computation by a first service node or a route computation server according to the property of the fourth interface, and the signaling includes at least a node identifier NODEID, an index of a second interface, an index of a first interface, an index of the fourth interface, an inbound direction wavelength of the second interface, and an outbound direction wavelength of the first interface that are of the optical network element.

Specifically, for a wavelength switched path that goes through the electrical regenerator, an ERO object in the signaling protocol RSVP is extended, so as to carry information about the remote interfaces, where the information about the remote interfaces is the interface index of the third interface and the interface index of the fourth interface.

Specifically, the extended signaling includes the node identifier NE1 of the optical network element A and I1, I2, λ1, λ2, and I3 and/or I4 that are of the optical network element.

Specifically, when the optical network element floods the property of the third interface and the property of the fourth interface to all the optical network elements on the network on which the optical network element is located, the first service node computes, according to all resources and topologies of the network, the wavelength path when the optical network element NE1 goes through the electrical regenerator on the electrical network element NE2.

Specifically, the optical network element extends the explicit route object (EXPLICIT_ROUTE OBJECT, ERO) in the Resource Reservation Protocol (ReSource reservation Protocol, RSVP), so that an extended ERO object carries I4, the index of the fourth interface of the optical network element in a second direction.

When a service in the second direction is established, the first interface I2 in the second direction is an inbound interface in the second direction, the second interface I1 in the second direction is an outbound interface in the second direction, λ2 is an inbound direction wavelength in the second direction, and λ1 is an outbound direction wavelength in the second direction.

Step 504: The optical network element establishes a first local wavelength connection in a second direction according to the index of the second interface, the inbound direction wavelength of the second interface, and the index of the fourth interface that are in the signaling, and establishes a second local wavelength connection in the second direction according to the index of the fourth interface, the index of the first interface, and the outbound direction wavelength of the first interface, where the second direction is a direction from an inbound direction of the second interface to an outbound direction of the first interface.

Specifically, referring to FIG. 3, the second direction is used as an example. For convenience of description, the first local wavelength connection in the second direction is (I2, λ2) -> (I3, λ2), and the second local connection in the second direction is (I3, λ1) -> (I1, λ1).

Step 505: The optical network element delivers a message, where the message includes at least the NODEID, the index of the fourth interface, an outbound direction wavelength of the fourth interface, and an inbound direction wavelength of the fourth interface that are of the optical network element, or a NODEID, an index of the sixth interface, an inbound direction wavelength of the sixth interface, and an outbound direction wavelength of the sixth interface that are of the electrical network element, so that the electrical network element establishes a wavelength connection from an inbound direction of the sixth interface to an outbound direction of the sixth interface according to the message.

It is implementable that the optical network element acquires the NODEID of the electrical network element according to the remote interface of the fourth interface, that is, the sixth interface;
a C-Type is added by extending a C-Type of an ERROR_SPEC object in a NOTIFY message in the RSVP protocol; and
the message is delivered to the electrical network element.

Specifically, for a format of an assembled message, refer to FIG. 4. A forward mapping regeneration node ID is the NODEID of the optical network element, an index of a forward mapping regeneration interface is the interface index of the fourth interface of the optical network element, an outgoing label of the forward mapping regeneration interface is the outbound direction wavelength λ2 of the fourth interface, and an incoming label of the forward mapping regeneration interface is the inbound direction wavelength λ1 of the fourth interface. Specifically, the local wavelength connection for the electrical network element in the second direction is used as an example, and the local wavelength connection for the electrical network element in the second direction is (I6, λ2) -> (I6, λ1).

This embodiment of the present invention provides a signaling establishment method when an electrical regenerator is on an electrical network element. According to the method, a property of a sixth interface is mapped to a property of a fourth interface, and all optical network elements on an optical network on which the optical network element is located is informed, by means of routing flooding, of the property of the fourth interface, so that the optical network element establishes a local wavelength connection for the optical network element according to signaling; and the optical network element delivers a message, so that the electrical network element establishes a local wavelength connection for the electrical network element according to the message, thereby implementing that a wavelength switched path that goes through an electrical regenerator is established when the electrical regenerator is on an electrical network element.

### Embodiment 3

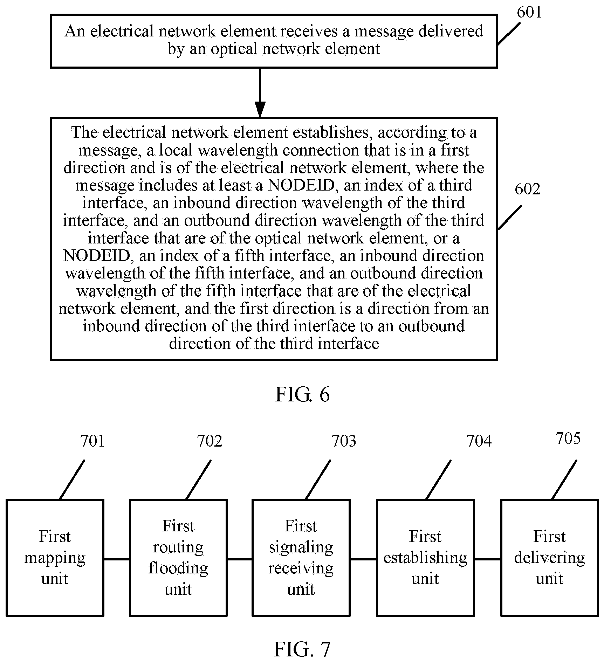

Referring to FIG. 6, FIG. 6 is a flowchart of a signaling establishment method when an electrical regenerator is on an electrical network element according to Embodiment 3 of the present invention. As shown in FIG. 6, the method includes the following steps:
Step 601: The electrical network element receives a message delivered by the optical network element.
Step 602: The electrical network element establishes, according to the message, a local wavelength connection for the electrical network element in a first direction, where the message includes at least a NODEID, an index of a third interface, an inbound direction wavelength of the third interface, and an outbound direction wavelength of the third interface that are of the optical network element, or a NODEID, an index of a fifth interface, an inbound direction wavelength of the fifth interface, and an outbound direction wavelength of the fifth interface that are of the electrical network element, and the first direction is a direction from an inbound direction of the fifth interface to an outbound direction of the fifth interface.

Specifically, the information includes NE1, I3 and/or I4, λ1, and λ2.

Specifically, that the electrical network element establishes, according to the message, a local wavelength connection for the electrical network element in a first direction includes the following:
the electrical network element establishes, according to the message, the local wavelength connection from the inbound direction wavelength of the fifth interface to the outbound direction wavelength of the fifth interface through a wavelength of the fifth interface. As shown in FIG. 2, the local wavelength connection for the electrical network element in the first direction is (I5, λ1) -> (I5, λ2).

Specifically, that the electrical network element establishes, according to the message, a local wavelength connection for the electrical network element in a first direction includes the following:
when the message includes the NODEID, the inbound direction wavelength of the third interface, the outbound direction wavelength of the third interface, and the index of the third interface that are of the optical network element, the electrical network element finds, according to the NODEID and the index of the third interface that are of the optical network element and are carried in the message, the index of the fifth interface of the electrical network element, where a condition for the finding is that the fifth interface is a remote interface of the third interface; and
establishes, according to the index of the fifth interface, the inbound direction wavelength of the third interface, and the outbound direction wavelength of the third interface, the local wavelength connection for the electrical network element in the first direction.

In an exemplary embodiment, the method further includes:
exchanging, by the electrical network element, information with the optical network element by using a proprietary protocol, where the message includes at least the NODEID, the index of the third interface, the inbound wavelength of the third interface, and the outbound direction wavelength of the third interface that are of the optical network element, or the NODEID, the index of the fifth interface, the inbound direction wavelength of the fifth interface, and the outbound direction wavelength of the fifth interface that are of the electrical network element.

In another implementable manner, the method further includes:
receiving, by the electrical network element, a message delivered by the optical network element; and
establishing, by the electrical network element according to the message, a local wavelength connection for the electrical network element in a second direction, where the message includes at least the NODEID, an index of a fourth interface, an outbound direction wavelength of the fourth interface, and an inbound direction wavelength of the fourth interface that are of the optical network element, or the NODEID, an index of a sixth interface, an inbound direction wavelength of the sixth interface, and an outbound direction wavelength of the sixth interface that are of the electrical network element.

As shown in FIG. 2, the local wavelength connection for the electrical network element in the second direction is (I6, λ2) -> (I6, λ1).

This embodiment of the present invention provides a signaling establishment method when an electrical regenerator is on an electrical network element. According to the method, the electrical network element receives a message delivered by the optical network element, and establishes, according to the message, a local wavelength connection for the electrical network element in a first direction, thereby implementing that a wavelength switched path that goes through an electrical regenerator is established when the electrical regenerator is on an electrical network element.

### Embodiment 4

Referring to FIG. 7, FIG. 7 is a structural diagram of an optical network element apparatus according to Embodiment 4 of the present invention. As shown in FIG. 7, the apparatus includes the following units: a first mapping unit 701, a first routing flooding unit 702, a first signaling receiving unit 703, a first establishing unit 704, and a first delivering unit 705.

The first mapping unit 701 is configured to enable the optical network element to map a property of a fifth interface to a property of a third interface, where the third interface is an interface of a combiner and a splitter on the optical network element, and the fifth interface is an interface of an electrical regenerator on an electrical network element.

It is implementable that the first mapping unit 701 includes:
a configuring and discovering unit 801, configured to enable the optical network element to configure the fifth interface as a remote interface of the third interface, or automatically discover, by using the Link Management Protocol LMP, that the fifth interface is a remote interface of the third interface;
a receiving unit 802, configured to enable the optical network element to receive the property of the fifth interface that is sent by the electrical network element by using the LMP protocol; and
a mapping unit 803, configured to enable the optical network element to map the property of the fifth interface to the property of the third interface.

Specifically, the optical network element configures or automatically discovers, by using the Link Management Protocol, that the fifth interface is the remote interface of the third interface. As shown in FIG. 2, the third interface and a fourth interface are interfaces of the optical network element NE1 on combiners and splitters, and the fifth interface and a sixth interface are interfaces of the electrical regenerator on the electrical network element NE2; and the optical network element manually configures or automatically discovers, by using the Link Management Protocol LMP protocol, that the fifth interface is the remote interface of the third interface, and the sixth interface is a remote interface of the fourth interface.

The property includes:
link-supported wavelength capacity, resource bandwidth information, link state, and optical damage.

The first routing flooding unit 702 is configured to enable the optical network element to inform all optical network elements on an optical network on which the optical network element is located, of the property of the third interface by means of routing flooding.

Specifically, the optical network element maps the property of the fifth interface and the property of the sixth interface to the third interface and the fourth interface by using an extended LMP protocol or a proprietary protocol, and floods, by using routing, the property of the third interface and the property of the fourth interface to all optical network elements on an automatically switched optical network (Automatically Switched Optical Network, ASON) of the network on which the optical network element is located.

The first signaling receiving unit 703 is configured to enable the optical network element to receive routing information carried in signaling, where the route is obtained by means of computation by a first service node or a route computation server according to all resources and topologies of the network, the all resources and topologies of the network include the property of the third interface, and the routing information carried in the signaling includes at least a node identifier, an index of a first interface, an index of a second interface, an index of the third interface, an inbound direction wavelength of the first interface, and an outbound direction wavelength of the second interface that are of the optical network element.

Specifically, for a wavelength switched path that goes through the electrical regenerator, an ERO object in the signaling protocol RSVP is extended, so as to carry information about the remote interfaces, where the information about the remote interfaces is the interface index of the third interface and the interface index of the fourth interface.

Specifically, the extended signaling includes the node identifier NE1 of the optical network element A and I1, I2, λ1, λ2, and I3 and/or I4 that are of the optical network element.

Specifically, when the optical network element floods the property of the third interface and the property of the fourth interface to all the optical network elements on the network on which the optical network element is located, the first service node computes, according to the all resources and topologies of the network, the wavelength path when the optical network element NE1 goes through the electrical regenerator on the electrical network element NE2.

Specifically, the optical network element extends the explicit route object (EXPLICIT_ROUTE OBJECT, ERO) in the Resource Reservation Protocol (ReSource reservation Protocol, RSVP), so that an extended ERO object carries I3, the index of the third interface of the optical network element in a first direction.

When a service in the first direction is established, the first interface I1 in the first direction is an inbound interface in the first direction, the second interface I2 in the first direction is an outbound interface in the first direction, λ1 is an inbound direction wavelength in the first direction, and λ2 is an outbound direction wavelength in the first direction.

The first establishing unit 704 is configured to enable the optical network element to: establish a first local wavelength connection in the first direction according to the index of the first interface, the inbound direction wavelength of the first interface, and the index of the third interface that are in the signaling, where the first local wavelength connection is connected from the first interface to the third interface by using the inbound wavelength of the first interface; and establish a second local wavelength connection in the first direction according to the index of the third interface, the index of the second interface, and the outbound wavelength of the second interface that are in the signaling, where the second local wavelength connection is connected from the third interface to the second interface by using the outbound direction wavelength of the second interface, and the first direction is a direction from an inbound direction of the first interface to an outbound direction of the second interface.

Specifically, referring to FIG. 3, the first direction is used as an example. For convenience of description, the first local wavelength connection in the first direction is (I1, λ1) -> (I3, λ1), and the second local connection in the first direction is (I3, λ2) -> (I2, λ2).

The first delivering unit 705 is configured to enable the optical network element to deliver a message, where the message includes at least the NODEID, the index of the third interface, an inbound direction wavelength of the third interface, and an outbound direction wavelength of the third interface that are of the optical network element, or a NODEID, an index of the fifth interface, an inbound direction wavelength of the fifth interface, and an outbound direction wavelength of the fifth interface that are of the electrical network element, so that the electrical network element establishes a local wavelength connection from an inbound direction of the fifth interface to an outbound direction of the fifth interface according to the message.

It is implementable that the optical network element acquires the NODEID of the electrical network element according to the remote interface of the third interface, that is, the fifth interface;
a C-Type is added by extending a C-Type of an ERROR_SPEC object in a NOTIFY message in the RSVP protocol; and
the message is delivered to the electrical network element.

Specifically, for a format of an assembled message, refer to FIG. 4. A forward mapping regeneration node is the NODEID of the optical network element, an index of a forward mapping regeneration interface is the interface index of the third interface of the optical network element, an outgoing label of the forward mapping regeneration interface is the inbound direction wavelength λ1 of the third interface, an inverse mapping regeneration node is the NODEID of the optical network element, an index of an inverse mapping regeneration interface is the interface index of the third interface of the optical network element, and an outgoing label of the inverse mapping regeneration interface is the outbound direction wavelength λ2 of the third interface.

Specifically, the local wavelength connection for the electrical network element in the first direction is used as an example, and the local wavelength connection for the electrical network element in the first direction is (I5, λ1) -> (I5, λ2).

In an implementable embodiment, the optical network element further includes a second mapping unit 901, a second routing flooding unit 902, a second signaling receiving unit 903, a second establishing unit 904, and a second delivering unit 905.

The second mapping unit 901 is configured to enable the optical network element to map a property of a sixth interface to a property of a fourth interface, where the fourth interface is an interface of a combiner and a splitter on the optical network element, and the sixth interface is an interface of the electrical regenerator on the electrical network element.

It is implementable that the mapping, by the optical network element, a property of a sixth interface to a property of a fourth interface includes:
configuring, by the optical network element, the sixth interface as the remote interface of the fourth interface, or automatically discovering, by the Link Management Protocol, that the sixth interface is the remote interface of the fourth interface;
receiving, by the optical network element, the property of the fourth interface that is sent by the electrical network element by using the LMP protocol; and
mapping, by the optical network element, the property of the sixth interface to the property of the fourth interface.

Specifically, the optical network element configures or automatically discovers, by using the Link Management Protocol, that the sixth interface is the remote interface of the fourth interface. As shown in FIG. 2, the third interface and the fourth interface are interfaces of the optical network element NE1 on combiners and splitters, and the fifth interface and the sixth interface are interfaces of the electrical regenerator on the electrical network element NE2; and the optical network element manually configures or automatically discovers, by using the Link Management Protocol LMP protocol, that the fifth interface is the remote interface of the third interface, and the sixth interface is the remote interface of the fourth interface.

The second routing flooding unit 902 is configured to enable the optical network element to inform, by means of routing flooding, all the optical network elements on an optical network on which the optical network element is located, of the property of the fourth interface.

Specifically, the optical network element maps the property of the fifth interface and the property of the sixth interface to the third interface and the fourth interface by using an extended LMP protocol or a proprietary protocol, and floods, by using routing, the property of the third interface and the property of the fourth interface to all optical network elements on an automatically switched optical network (Automatically Switched Optical Network, ASON) of the network on which the optical network element is located.

The second signaling receiving unit 903 is configured to enable the optical network element to receive routing information carried in signaling, where the route is obtained by means of computation by the first service node or the route computation server according to the property of the fourth interface, and the signaling includes at least the node identifier NODEID, the index of the second interface, the index of the first interface, an index of the fourth interface, an inbound direction wavelength of the second interface, and an outbound direction wavelength of the first interface that are of the optical network element.

Specifically, for a wavelength switched path that goes through the electrical regenerator, an ERO object in the signaling protocol RSVP is extended, so as to carry information about the remote interfaces, where the information about the remote interfaces is the interface index of the third interface and the interface index of the fourth interface.

Specifically, the extended signaling includes the node identifier NE1 of the optical network element A and I1, I2, λ1, λ2, and I3 and/or I4 that are of the optical network element.

Specifically, when the optical network element floods the property of the third interface and the property of the fourth interface to all the optical network elements on the network on which the optical network element is located, the first service node computes, according to the all resources and topologies of the network, the wavelength path when the optical network element NE1 goes through the electrical regenerator on the electrical network element NE2.

Specifically, the optical network element extends the explicit route object (EXPLICIT_ROUTE OBJECT, ERO) in the Resource Reservation Protocol (ReSource reservation Protocol, RSVP), so that an extended ERO object carries I4, the index of the fourth interface of the optical network element in a second direction.

When a service in the second direction is established, the first interface I2 in the second direction is an inbound interface in the second direction, the second interface I1 in the second direction is an outbound interface in the second direction, λ2 is an inbound direction wavelength in the second direction, and λ1 is an outbound direction wavelength in the second direction.

The second establishing unit 904 is configured to enable the optical network element to: establish a first local wavelength connection in the second direction according to the index of the second interface, the inbound direction wavelength of the second interface, and the index of the fourth interface that are in the signaling; and establish a second local wavelength connection in the second direction according to the index of the fourth interface, the index of the first interface, and the outbound direction wavelength of the first interface that are in the signaling, where the second direction is a direction from an inbound direction of the second interface to an outbound direction of the first interface.

Specifically, referring to FIG. 3, the second direction is used as an example. For convenience of description, the first local wavelength connection in the second direction is (I2, λ2) -> (I3, λ2), and the second local connection in the second direction is (I3, λ1) -> (I1, λ1).

The second delivering unit 905 is configured to enable the optical network element to deliver a message, where the message includes at least the NODEID, the index of the fourth interface, an outbound direction wavelength of the fourth interface, and an inbound direction wavelength of the fourth interface that are of the optical network element, or the NODEID, an index of the sixth interface, an inbound direction wavelength of the sixth interface, and an outbound direction wavelength of the sixth interface that are of the electrical network element, so that the electrical network element establishes a wavelength connection from an inbound direction of the sixth interface to an outbound direction of the sixth interface according to the message.

It is implementable that the optical network element acquires the NODEID of the electrical network element according to the remote interface of the fourth interface, that is, the sixth interface;
a C-Type is added by extending a C-Type of an ERROR_SPEC object in a NOTIFY message in the RSVP protocol; and
the message is delivered to the electrical network element.

Specifically, for a format of an assembled message, refer to FIG. 4. A forward mapping regeneration node is the NODEID of the optical network element, an index of a forward mapping regeneration interface is the interface index of the third interface of the optical network element, an outgoing label of the forward mapping regeneration interface is the inbound direction wavelength λ1 of the third interface, an inverse mapping regeneration node is the NODEID of the optical network element, an index of an inverse mapping regeneration interface is the interface index of the third interface of the optical network element, and an outgoing label of the inverse mapping regeneration interface is the outbound direction wavelength λ2 of the third interface.

Specifically, the local wavelength connection for the electrical network element in the second direction is used as an example, and the local wavelength connection for the electrical network element in the second direction is (I6, λ2) -> (I6, λ1).

This embodiment of the present invention provides an optical network element, where the optical network element maps a property of a fifth interface to a property of a third interface, and informs, by means of routing flooding, all optical network elements on an optical network on which the optical network element is located, of the property of the third interface, so that the optical network element establishes a local wavelength connection for the optical network element according to signaling; and the optical network element delivers a message, so that the electrical network element establishes a local wavelength connection for the electrical network element according to the message, thereby implementing that a wavelength switched path that goes through an electrical regenerator is established when the electrical regenerator is on an electrical network element.

### Embodiment 5

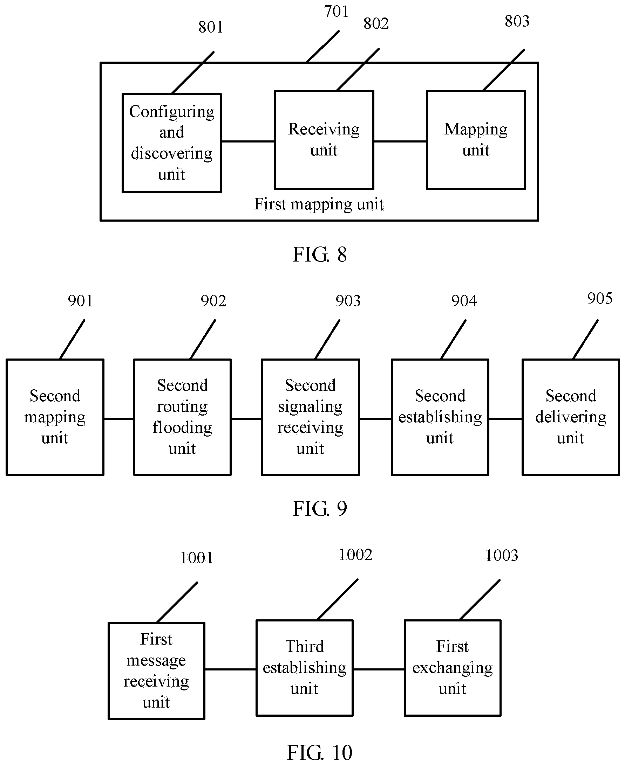

Referring to FIG. 10, FIG. 10 is a structural diagram of an electrical network element apparatus according to Embodiment 5 of the present invention. As shown in FIG. 10, the electrical network element includes the following units:
a first message receiving unit 1001, configured to enable the electrical network element to receive a message delivered by the optical network element; and
a third establishing unit 1002, configured to enable the electrical network element to establish, according to the message, a local wavelength connection for the electrical network element in a first direction, where the message includes at least a NODEID, an index of a third interface, an inbound direction wavelength of the third interface, and an outbound direction wavelength of the third interface that are of the optical network element, or a NODEID, an index of a fifth interface, an inbound direction wavelength of the fifth interface, and an outbound direction wavelength of the fifth interface that are of the electrical network element, and the first direction is a direction from an inbound direction of the fifth interface to an outbound direction of the fifth interface.

Specifically, the information includes NE1, and I3 and/or I4, λ1, and λ2.

It is implementable that, that a third establishing unit 1002 is configured to enable the electrical network element to establish, according to the message, a local wavelength connection for the electrical network element in a first direction includes:
the electrical network element establishes, according to the message, the local wavelength connection from the inbound direction wavelength of the fifth interface to the outbound direction wavelength of the fifth interface through a wavelength of the fifth interface. As shown in FIG. 2, the local wavelength connection for the electrical network element in the first direction is (I5, λ1) -> (I5, λ2).

Specifically, the third establishing unit 1002 is specifically configured to:
when the message includes the NODEID, the inbound direction wavelength of the third interface, the outbound direction wavelength of the third interface, and the index of the third interface that are of the optical network element, enable the electrical network element to find, according to the NODEID and the index of the third interface that are of the optical network element and are carried in the message, the index of the fifth interface of the electrical network element, where a condition for the finding is that the fifth interface is a remote interface of the third interface; and
establish, according to the index of the fifth interface, the inbound direction wavelength of the third interface, and the outbound direction wavelength of the third interface, the local wavelength connection for the electrical network element in the first direction.

In an exemplary embodiment, the electrical network element further includes:
a first exchanging unit 1003, configured to enable the electrical network element to exchange information with the optical network element by using a proprietary protocol, where the message includes at least the NODEID, the index of the third interface, the inbound direction wavelength of the third interface, and the outbound direction wavelength of the third interface that are of the optical network element, or the NODEID, the index of the fifth interface, the inbound direction wavelength of the fifth interface, and the outbound direction wavelength of the fifth interface that are of the electrical network element.

In an implementable embodiment, the electrical network element further includes:
a second message receiving unit 1101, configured to enable the electrical network element to receive a message delivered by the optical network element; and
a fourth establishing unit 1102, configured to enable the electrical network element to establish, according to the message, a local wavelength connection for the electrical network element in a second direction, where the message includes at least the NODEID, an index of a fourth interface, an outbound direction wavelength of the fourth interface, and an inbound direction wavelength of the fourth interface that are of the optical network element, or the NODEID, an index of a sixth interface, an inbound direction wavelength of the sixth interface, and an outbound direction wavelength of the sixth interface that are of the electrical network element.

It is implementable that, that a fourth establishing unit 1102 is configured to enable the electrical network element to establish, according to the message, a local wavelength connection for the electrical network element in a second direction includes:
the electrical network element establishes, according to the message, the local wavelength connection from the inbound direction wavelength of the sixth interface to the outbound direction wavelength of the sixth interface through a wavelength of the sixth interface. Specifically, the fourth establishing unit 1102 is specifically configured to:
when the message includes the NODEID, the outbound direction wavelength of the fourth interface, the inbound direction wavelength of the fourth interface, and the index of the fourth interface that are of the optical network element, enable the electrical network element to find, according to the NODEID and the index of the fourth interface that are of the optical network element and are carried in the message, the index of the sixth interface of the electrical network element, where a condition for the finding is that the sixth interface is a remote interface of the fourth interface; and
establish, according to the index of the sixth interface, the inbound direction wavelength of the fourth interface, and the outbound direction wavelength of the fourth interface, the local wavelength connection for the electrical network element in the second direction.

In another exemplary embodiment, the electrical network element further includes:
a second exchanging unit 1103, configured to enable the electrical network element to exchange information with the optical network element by using a proprietary protocol, where the message includes at least the NODEID, the index of the fourth interface, the outbound direction wavelength of the fourth interface, and the inbound direction wavelength of the fourth interface that are of the optical network element, or the NODEID, the index of the sixth interface, the inbound direction wavelength of the sixth interface, and the outbound direction wavelength of the sixth interface that are of the electrical network element.

As shown in FIG. 2, the local wavelength connection for the electrical network element in the second direction is (I6, λ2) -> (I6, λ1).

This embodiment of the present invention provides an electrical network element, where the electrical network element receives a message delivered by the optical network element, and establishes, according to the message, a local wavelength connection for the electrical network element in a first direction, thereby implementing that a wavelength switched path that goes through an electrical regenerator is established when the electrical regenerator is on the electrical network element.

### EMBODIMENT 6

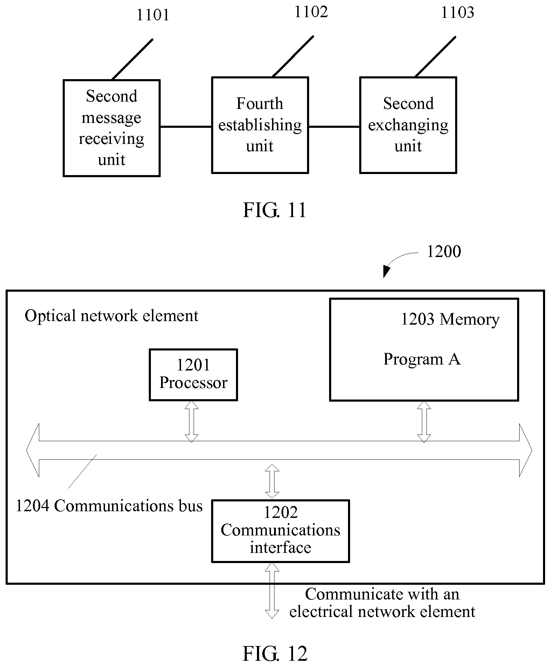

Referring to FIG. 12, FIG. 12 is a structural diagram of an optical network element apparatus according to Embodiment 6 of the present invention. Referring to FIG. 12, FIG. 12 shows an optical network element 1200 according to this embodiment of the present invention, and a specific embodiment of the present invention sets no limitation on specific implementation of the device. The optical network element 1200 includes:
a processor (processor) 1201, a communications interface (Communications Interface) 1202, a memory (memory) 1203, and a bus 1204.

The processor 1201, the communications interface 1202, and the memory 1203 complete mutual communication through the bus 1204.

The communications interface 1202 is configured to communicate with an electrical network element.

The processor 1201 is configured to execute a program.

Specifically, the program may include program code, where the program code includes computer operation instructions.

The processor 1201 may be a central processing unit CPU, or an application specific integrated circuit ASIC (Application Specific Integrated Circuit), or one or more integrated circuits configured to implement this embodiment of the present invention.

The memory 1203 is configured to store a program, where: the memory 1203 may include a high-speed RAM memory, and may also include a non-volatile memory (non-volatile memory), and the program may specifically include the following:
the optical network element maps a property of a fifth interface to a property of a third interface, where the third interface is an interface of a combiner and a splitter on the optical network element, and the fifth interface is an interface of an electrical regenerator on the electrical network element;
the optical network element informs, by means of routing flooding, all optical network elements on an optical network on which the optical network element is located, of the property of the third interface;
the optical network element receives routing information carried in signaling, where the route is obtained by means of computation by a first service node or a route computation server according to all resources and topologies of the network, the all resources and topologies of the network include the property of the third interface, and the routing information carried in the signaling includes at least a node identifier of the optical network element, and an index of a first interface, an index of a second interface, an index of the third interface, an inbound direction wavelength of the first interface, and an outbound direction wavelength of the second interface that are of the optical network element;
the optical network element establishes a first local wavelength connection in a first direction according to the index of the first interface, the inbound direction wavelength of the first interface, and the index of the third interface that are in the signaling, where the first local wavelength connection is connected from the first interface to the third interface by using the inbound wavelength of the first interface; and establishes a second local wavelength connection in the first direction according to the index of the third interface, the index of the second interface, and the outbound wavelength of the second interface that are in the signaling, where the second local wavelength connection is connected from the third interface to the second interface by using the outbound direction wavelength of the second interface, and the first direction is a direction from an inbound direction of the first interface to an outbound direction of the second interface; and
the optical network element delivers a message, where the message includes at least the NODEID, the index of the third interface, an inbound direction wavelength of the third interface, and an outbound direction wavelength of the third interface that are of the optical network element, or a NODEID, an index of the fifth interface, an inbound direction wavelength of the fifth interface, and an outbound direction wavelength of the fifth interface that are of the electrical network element, so that the electrical network element establishes a local wavelength connection from an inbound direction of the fifth interface to an outbound direction of the fifth interface according to the message.

### EMBODIMENT 7

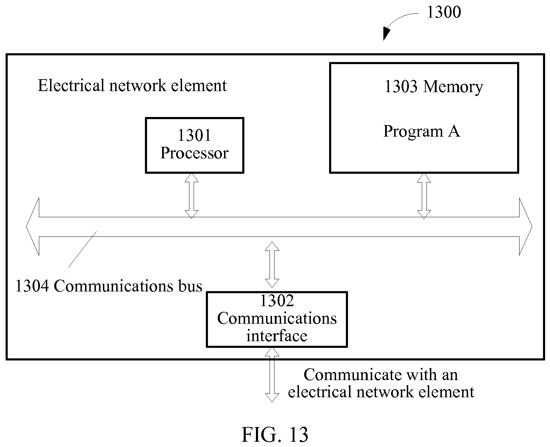

Referring to FIG. 13, FIG. 13 is a structural diagram of an electrical network element apparatus according to Embodiment 7 of the present invention. Referring to FIG. 13, FIG. 13 shows an electrical network element 1300 according to this embodiment of the present invention, and a specific embodiment of the present invention sets no limitation on specific implementation of the device. The electrical network element 1300 includes:
a processor (processor) 1301, a communications interface (Communications Interface) 1302, a memory (memory) 1303, and a bus 1304.

The processor 1301, the communications interface 1302, and the memory 1303 complete mutual communication through the bus 1304.

The communications interface 1302 is configured to communicate with an optical network element.

The processor 1301 is configured to execute a program.

Specifically, the program may include program code, where the program code includes computer operation instructions.

The processor 1301 may be a central processing unit CPU, or an application specific integrated circuit ASIC (Application Specific Integrated Circuit), or one or more integrated circuits configured to implement this embodiment of the present invention.

The memory 1303 is configured to store a program, where: the memory 1303 may include a high-speed RAM memory, and may also include a non-volatile memory (non-volatile memory). The program may specifically include the following:
the electrical network element receives a message delivered by the optical network element; and
the electrical network element establishes, according to the message, a local wavelength connection for the electrical network element in a second direction, where the message includes at least a NODEID, an index of a fourth interface, an outbound direction wavelength of the fourth interface, and an inbound direction wavelength of the fourth interface that are of the optical network element, or a NODEID, an index of a sixth interface, an inbound direction wavelength of the sixth interface, and an outbound direction wavelength of the sixth interface that are of the electrical network element.

The foregoing descriptions are merely exemplary implementation manners of the present invention, and are not intended to limit the protection scope of the present invention. Any modification, equivalent replacement, and improvement made without departing from the principle of the present invention shall fall within the protection scope of the present invention.

## Claims

1. A signaling establishment method for use in a system comprising an optical network element (NE1) and an electrical network element (NE2), wherein the optical network element (NE1) comprises a first interface (I1), a second interface (I2), and a third interface (I3), each interface (I1, I2, I3) of the optical network element (NE1) comprises a splitter and a combiner, the electrical network element (NE2) comprises a fifth interface (I5) of an electrical regenerator of the electrical network element (NE2), and the method comprises the steps:
configuring, by the optical network element (NE1), the fifth interface (I5) as a remote interface of the third interface (I3), or automatically discovering, by using the Link Management Protocol, LMP, that the fifth interface (I5) is a remote interface of the third interface (I3), wherein the combiner of the third interface (I3) provides an inbound interface of the optical network element (NE1) and the splitter of the third interface (I3) provides an outbound interface of the optical network element (NE1) for a communication with the fifth interface (I5),
receiving, by the optical network element (NE1), a property of the fifth interface (I5) that is sent by the electrical network element (NE2) by using the LMP protocol;
mapping (101), by the optical network element (NE1), the received property of the fifth interface (I5) to a property of the third interface (I3), wherein the property comprises link-supported wavelength capacity, resource bandwidth information, link state, and optical damage;
informing (102), by the optical network element, by means of flooding by using routing, all optical network elements on an optical network on which the optical network element (NE1) is located, of the property of the third interface (I3);
receiving (103), by the optical network element (NE1), routing information carried in extended signaling by means of an explicit route object, ERO, in a Resource Reservation Protocol, RSVP, wherein a route is obtained by means of computation by a first service node or a route computation server according to all resources and topologies of the network, wherein all the resources and topologies of the network comprise the property of the third interface (I3), and wherein the routing information carried in the extended signaling comprises at least a node identifier of the optical network element (NE1), and an index of the first interface (I1), an index of a second interface (I2), an index of the third interface (I3), an inbound direction wavelength (λ1) of the first interface (I1), and an outbound direction wavelength (λ2) of the second interface (I2) of the optical network element (NE1);
establishing (104), by the optical network element (NE1), a first local wavelength connection in a first direction according to the index of the first interface (I1), the inbound direction wavelength (λ1) of the first interface (I1), and the index of the third interface (I3) that are comprised in the extended signaling, wherein the first local wavelength connection is connected from the first interface (I1) to the third interface (I3) by using the inbound wavelength (λ1) of the first interface (I1), and establishing a second local wavelength connection in the first direction according to the index of the third interface (I3), the index of the second interface (I2), and the outbound wavelength of the second interface (I2) that are comprised in the extended signaling, wherein the second local wavelength connection is connected from the third interface (I3) to the second interface (I2) by using the outbound wavelength (λ2) of the second interface (I2), and the first direction is a direction from an inbound direction of the first interface (I1) to an outbound direction of the second interface (I2); and
delivering (105), by the optical network element (NE1), a message to the electrical network element (NE2), wherein the message comprises at least a node identifier, NODEID, the index of the third interface (I3), an inbound direction wavelength (λ2) of the third interface (I3), and an outbound direction wavelength (λ1) of the third interface (I3) of the optical network element (NE1), or wherein the message comprises a node identifier, NODEID, an index of the fifth interface (15), an inbound direction wavelength (λ1) of the fifth interface (I5), and an outbound direction wavelength (λ2) of the fifth interface (I5) of the electrical network element (NE2), so that the electrical network element (NE2) establishes a local wavelength connection from the inbound direction wavelength (λ1) of the fifth interface (I5) to the outbound direction wavelength (λ2) of the fifth interface (I5) according to the message.

2. The method according to claim 1, wherein the optical network element (NE1) comprises a fourth interface (I4), the fourth interface of the optical network element (NE1) comprises a splitter and a combiner, the electrical network element (NE2) comprises a sixth interface (I6) of the electrical regenerator of the electrical network element (NE2), and the method further comprises the steps:
configuring, by the optical network element (NE1), the sixth interface (I6) as a remote interface of the fourth interface (I4), or automatically discovering, by using the LMP protocol, that the sixth interface (I6) is a remote interface of the fourth interface (I4) wherein the combiner of the fourth interface (I4) provides an inbound interface of the optical network element (NE1) and the splitter of the fourth interface (I4) provides an outbound interface of the optical network element (NE1) for a communication with the sixth interface (I6);
receiving, by the optical network element (NE1), a property of the fourth interface (I4) that is sent by the electrical network element (NE2) by using the LMP protocol; and
mapping (501), by the optical network element (NE1), the received property of the sixth interface (16) to a property of the fourth interface (I4), wherein the property comprises link-supported wavelength capacity, resource bandwidth information, link state, and optical damage;
informing (502), by the optical network element (NE1), by means of flooding by using routing, all the optical network elements on the optical network on which the optical network element (NE1) is located, of the property of the fourth interface (I4);
receiving (503), by the optical network element (NE1), routing information carried in extended signaling by means of an ERO object in a RSVP protocol, wherein the route is obtained by means of computation by the first service node or the route computation server according to the property of the fourth interface (I4), and the extended signaling comprises at least the node identifier, NODEID, the index of the second interface (I2), the index of the first interface (I1), an index of the fourth interface (I4), an inbound direction wavelength (λ2) of the second interface (I2), and an outbound direction wavelength (λ1) of the first interface (I1) of the optical network element (NE1);
establishing (504), by the optical network element (NE1), a first local wavelength connection in a second direction according to the index of the second interface (I2), the inbound direction wavelength (λ2) of the second interface (I2), and the index of the fourth interface (I4) that are comprised in the extended signaling, and establishing a second local wavelength connection in the second direction according to the index of the fourth interface (I4), the index of the first interface (I1), and the outbound direction wavelength (λ1) of the first interface (I1) that are comprised in the extended signaling, wherein the second direction is a direction from an inbound direction of the second interface (I2) to an outbound direction of the first interface (I1); and
delivering (505), by the optical network element (NE1), a message, wherein the message comprises at least the NODEID, the index of the fourth interface (I4), an outbound direction wavelength (λ2) of the fourth interface (I4), and an inbound direction wavelength (λ1) of the fourth interface (I4) of the optical network element (NE1), or wherein the message comprises the NODEID, an index of the sixth interface (I6), an inbound direction wavelength (λ2) of the sixth interface (I6), and an outbound direction wavelength (λ1 ) of the sixth interface (I6) of the electrical network element (NE2), so that the electrical network element (NE2) establishes a wavelength connection from the inbound direction wavelength (λ2) of the sixth interface (I6) to the outbound direction wavelength (λ1) of the sixth interface (I6) according to the message.

3. A signaling establishment method for use in a system comprising an optical network element (NE1) and an electrical network element (NE2), wherein the optical network element (NE1) comprises a first interface (I1), a second interface (I2), and a third interface (I3), each interface (I1, I2, I3) of the optical network element (NE1) comprises a splitter and a combiner, the electrical network element (NE2) comprises a fifth interface (I5) of an electrical regenerator of the electrical network element (NE2), and the method comprises the steps:
receiving (601), by the electrical network element (NE2), a message delivered by an optical network element (NE1); and
establishing (602), by the electrical network element (NE2) according to the message, a local wavelength connection from an inbound direction wavelength (λ1) of the fifth interface (I5) to an outbound direction wavelength (λ2) of the fifth interface (I5) for the electrical network element (NE2) in a first direction, wherein the message comprises at least a node identifier, NODEID, an index of a third interface (I3) wherein the combiner of third interface (I3) provides an inbound interface of the optical network element (NE1) and and the splitter of the third interface (I3) provides an outbound interface of the optical network element (NE1) for a communication with the fifth interface (I5), an inbound direction wavelength (λ2) of the third interface (I3), and an outbound direction wavelength (λ1) of the third interface (I3) of the optical network element (NE1), or wherein the message comprises a node identifier, NODEID, an index of the fifth interface (15), the inbound direction wavelength (λ1) of the fifth interface (I5), and the outbound direction wavelength (λ2) of the fifth interface (I5) of the electrical network element (NE2), and the first direction is a direction from an inbound direction of the fifth interface (I5) to an outbound direction of the fifth interface (I5).

4. The method according to claim 3, wherein the establishing (602), by the electrical network element (NE2) according to the message, a local wavelength connection for the electrical network element (NE2) in a first direction comprises:
when the message comprises the NODEID, the inbound direction wavelength (λ2) of the third interface (I3), the outbound direction wavelength (λ1) of the third interface (I3), and the index of the third interface (I3) of the optical network element (NE1), finding, by the electrical network element (NE2) according to the NODEID and the index of the third interface (I3) of the optical network element (NE1) and are carried in the message, the index of the fifth interface (I5) of the electrical network element (NE2), wherein a condition for the finding is that the fifth interface (I5) is a remote interface of the third interface (I3); and
establishing the local wavelength connection for electrical network element (NE2) in the first direction according to the index of the fifth interface (I5), the inbound direction wavelength (λ2) of the third interface (I3), and the outbound direction wavelength (λ1) of the third interface (I3).

5. The method according to any one of claims 3 or 4, wherein the optical network element (NE1) comprises a fourth interface (I4), the fourth interface of the optical network element (NE1) comprises a splitter and a combiner, the electrical network element (NE2) comprises a sixth interface (I6) of the electrical regenerator of the electrical network element (NE2), and the method further comprises the steps:
receiving, by the electrical network element (NE2), a message delivered by the optical network element (NE1); and
establishing, by the electrical network element (NE2), according to the message, a local wavelength connection from an inbound direction wavelength (λ2) of the sixth interface (I6) to an outbound direction wavelength (λ1) of the sixth interface (I6) for the electrical network element (NE2) in a second direction, wherein the message comprises at least the NODEID, an index of the fourth interface (I4), an outbound direction wavelength (λ2) of the fourth interface (I4), and an inbound direction wavelength (λ1) of the fourth interface (I4) of the optical network element (NE1), or wherein the message comprises the NODEID, an index of a sixth interface (I6), an inbound direction wavelength (λ2) of the sixth interface (I6), and an outbound direction wavelength (λ1) of the sixth interface (I6) of the electrical network element (NE2).

6. An optical network element (NE1) for use in a system comprising the optical network element (NE1) and an electrical network element (NE2), wherein the optical network element (NE1) comprises a first interface (I1), a second interface (I2), and a third interface (I3), each interface (I1, I2, I3) of the optical network element (NE1) comprises a splitter and a combiner, and the electrical network element (NE2) comprises a fifth interface (I5) of an electrical regenerator of the electrical network element (NE2), wherein the optical network element (NE1) further comprises:
a first mapping unit (701), wherein the first mapping unit (701) comprises:
a configuring and discovering unit (801), configured to enable the optical network element (NE1) to configure the fifth interface (I5) as a remote interface of the third interface (I3), or automatically discover, by using the Link Management Protocol, LMP, that the fifth interface (I5) is a remote interface of the third interface (I3);
a receiving unit (802), configured to enable the optical network element (NE1) to receive a property of the fifth interface (I5) that is sent by the electrical network element (NE2) by using the LMP protocol; and
a mapping unit (803), configured to enable the optical network element (NE1) to map the received property of the fifth interface (I5) to a property of a third interface (I3), wherein the property comprises link-supported wavelength capacity, resource bandwidth information, link state, and optical damage;
a first routing flooding unit (702), configured to enable the optical network element to inform, by means of flooding by using routing, all optical network elements on an optical network on which the optical network element (NE1) is located, of the property of the third interface (I3);
a first signaling receiving unit (703), configured to enable the optical network element to receive routing information carried in extended signaling by means of an explicit route object, ERO, in a Resource Reservation Protocol, RSVP, wherein a route is obtained by means of computation by a first service node or a route computation server according to all resources and topologies of the network, wherein all the resources and topologies of the network comprise the property of the third interface (I3), and wherein the routing information carried in the extended signaling comprises at least a node identifier, an index of a first interface (I1), , an index of a second interface (I2), , an index of the third interface (I3), an inbound direction wavelength (λ1) of the first interface (I1), and an outbound direction wavelength (λ2) of the second interface (I2) of the optical network element (NE1);
a first establishing unit (704), configured to enable the optical network element (NE1) to: establish a first local wavelength connection in a first direction according to the index of the first interface (I1), the inbound direction wavelength (λ1) of the first interface (I1), and the index of the third interface (I3) that are comprised in the extended signaling, wherein the first local wavelength connection is connected from the first interface (I1) to the third interface (I3) by using the inbound wavelength (λ1) of the first interface (I1); and establish a second local wavelength connection in the first direction according to the index of the third interface (I3), the index of the second interface (I2), and the outbound wavelength (λ2) of the second interface (I2) that are comprised in the extended signaling, wherein the second local wavelength connection is connected from the third interface (I3) to the second interface (I2) by using the outbound wavelength (λ2) of the second interface (I2), and the first direction is a direction from an inbound direction of the first interface (I1) to an outbound direction of the second interface (I2); and
a first delivering unit (705), configured to enable the optical network element (NE1) to deliver a message to the electrical network element (NE2), wherein the message comprises at least a node identifier, NODEID, the index of the third interface (I3), an inbound direction wavelength (λ1) of the third interface (I3), and an outbound direction wavelength (λ2) of the third interface (I3) of the optical network element, or wherein the message comprises a node identifier, NODEID, an index of the fifth interface (I5), an inbound direction wavelength (λ1) of the fifth interface (I5), and an outbound direction wavelength (λ2) of the fifth interface (I5) of the electrical network element (NE2), so that the electrical network element (NE2) establishes a local wavelength connection from the inbound direction wavelength (λ1) of the fifth interface (I5) to the outbound direction wavelength (λ2) of the fifth interface (I5) according to the message.

7. The optical network element (NE1) according to claim 6, wherein the optical network element (NE1) comprises a fourth interface (I4), the fourth interface of the optical network element (NE1) comprises a splitter and a combiner, the electrical network element (NE2) comprises a sixth interface (I6) of the electrical regenerator of the electrical network element (NE2), and the optical network element (NE1) further comprises:
a second mapping unit (901), wherein the second mapping unit (901) comprises:
a second configuring and discovering unit, configured to enable the optical network element (NE1) to configure the sixth interface (I6) as a remote interface of the fourth interface (I4), or automatically discover, by using the Link Management Protocol, LMP, that the sixth interface (I6) is a remote interface of the fourth interface (I4);
a second receiving unit, configured to enable the optical network element (NE1) to receive a property of the sixth interface (I6) that is sent by the electrical network element (NE2) by using the LMP protocol; and
a second mapping unit configured to enable the optical network element (NE1) to map a property of a sixth interface (I6) to a property of a fourth interface (I4), wherein the property comprises link-supported wavelength capacity, resource bandwidth information, link state, and optical damage;
a second routing flooding unit (902), configured to enable the optical network element (NE1) to inform, by means of flooding by using routing, all the optical network elements on the optical network on which the optical network element (NE1) is located, of the property of the fourth interface (I4);
a second signaling receiving unit (903), configured to enable the optical network element (NE1) to receive routing information carried in extended signaling by means of an ERO object in a RSVP protocol, wherein the route is obtained by means of computation by the first service node or the route computation server according to the property of the fourth interface (I4), and the extended signaling comprises at least the node identifier, NODEID, the index of the second interface (I2), the index of the first interface (I1), an index of the fourth interface (I4), an inbound direction wavelength (λ2) of the second interface (I2), and an outbound direction wavelength (λ1) of the first interface (I1) of the optical network element (NE1);
a second establishing unit (904), configured to enable the optical network element (NE1) to: establish a first local wavelength connection in a second direction according to the index of the second interface (I2), the inbound wavelength (λ2) of the second interface (I2), and the index of the fourth interface (I4) that are comprised in the extended signaling; and establish a second local wavelength connection in the second direction according to the index of the fourth interface (I4), the index of the first interface (I1), and the outbound wavelength (λ1) of the first interface (I1) that are comprised in the extended signaling, wherein the second direction is a direction from an inbound direction of the second interface (I2) to an outbound direction of the first interface (I1); and
a second delivering unit (905), configured to enable the optical network element (NE1) to deliver a message, wherein the message comprises at least the NODEID, the index of the fourth interface (I4), an outbound direction wavelength (λ2) of the fourth interface (I4), and an inbound direction wavelength (λ1) of the fourth interface (I4) of the optical network element (NE1), or wherein the message comprises the NODEID, an index of the sixth interface (I6), an inbound direction wavelength (λ2) of the sixth interface (I6), and an outbound direction wavelength (λ1) of the sixth interface (I6) of the electrical network element (NE2), so that the electrical network element (NE2) establishes a wavelength connection from the inbound direction wavelength (λ2) of the sixth interface (I6) to the outbound direction wavelength (λ1) of the sixth interface (I6) according to the message.

8. An electrical network element (NE2) for use in a system comprising an optical network element (NE1) and the electrical network element (NE2), wherein the optical network element (NE1) comprises a first interface (I1), a second interface (I2), and a third interface (I3), each interface (I1, I2, I3) of the optical network element (NE1) comprises a splitter and a combiner, the electrical network element (NE2) comprises a fifth interface (I5) of an electrical regenerator of the electrical network element (NE2), and, wherein the electrical network element (NE2) further comprises:
a first message receiving unit (1001), configured to enable the electrical network element (NE2) to receive a message delivered by an optical network element (NE1); and
a third establishing unit (1002), configured to enable the electrical network element (NE2) to establish, according to the message, a local wavelength connection from an inbound direction wavelength (λ1) of the fifth interface (I5) to an outbound direction wavelength (λ2) of the fifth interface (I5) for the electrical network element (NE2) in a first direction, wherein the message comprises at least a node identifier NODEID, an index of a third interface (I3), wherein the combiner of the third interface (I3) provides an inbound interface of the optical network element (NE1) and and the splitter of the third interface (I3) provides an outbound interface of the optical network element (NE1) for a communication with the fifth interface (I5), an inbound direction wavelength (λ2) of the third interface (I3), and an outbound direction wavelength (λ1) of the third interface (I3) of the optical network element (NE1), or wherein the message comprises a node identifier NODEID, an index of a the fifth interface (I5), an inbound direction wavelength (λ1) of the fifth interface (I5), and an outbound direction wavelength (λ2) of the fifth interface (I5) of the electrical network element (NE2), and the first direction is a direction from an inbound direction of the fifth interface (I5) to an outbound direction of the fifth interface (I5).

9. The electrical network element (NE2) according to claim 8, wherein the third establishing unit (1002) is specifically configured to:
when the message comprises the NODEID, the inbound direction wavelength (λ2) of the third interface (I3), the outbound direction wavelength (λ1) of the third interface (I3), and the index of the third interface (I3) of the optical network element (NE1), enable the electrical network element (NE2) to find, according to the NODEID and the index of the third interface (I3) of the optical network element (NE1) and are carried in the message, the index of the fifth interface (I5) of the electrical network element (NE2), wherein a condition for the finding is that the fifth interface (I5) is a remote interface of the third interface (I3); and
establish, according to the index of the fifth interface (I5), the inbound direction wavelength (λ2) of the third interface (I3), and the outbound direction wavelength (λ1) of the third interface (I3), the local wavelength connection for the electrical network element (NE2) in the first direction.

10. The electrical network element (NE2) according to any one of claims 8 or 9, wherein the optical network element (NE1) comprises a fourth interface (I4), the fourth interface of the optical network element (NE1) comprises a splitter and a combiner, the electrical network element (NE2) comprises a sixth interface (I6) of the electrical regenerator of the electrical network element (NE2), and the electrical network element (NE2) further comprises:
a second message receiving unit, configured to enable the electrical network element (NE2) to receive a message delivered by the optical network element (NE1); and
a fourth establishing unit, configured to enable the electrical network element (NE2) to establish, according to the message, a local wavelength connection from an inbound direction wavelength (λ2) of the sixth interface (I6) to an outbound direction wavelength (λ1) of the sixth interface (I6) for the electrical network element (NE2) in a second direction, wherein the message comprises at least the NODEID, an index of the fourth interface (I4), an outbound direction wavelength (λ2) of the fourth interface (I4), and an inbound direction wavelength (λ1) of the fourth interface (I4) of the optical network element (NE1), or wherein the message comprises the NODEID, an index of a sixth interface (I6), an inbound direction wavelength (λ2) of the sixth interface (I6), and an outbound direction wavelength (λ1) of the sixth interface (I6) of the electrical network element (NE2).

## Patentansprüche

1. Signalisierungserstellungsverfahren zur Verwendung in einem System, das ein optisches Netzwerkelement (NE1) und ein elektrisches Netzwerkelement (NE2) umfasst, wobei das optische Netzwerkelement (NE1) eine erste Schnittstelle (I1), eine zweite Schnittstelle (I2) und eine dritte Schnittstelle (I3) umfasst, jede Schnittstelle (I1, I2, I3) des optischen Netzwerkelements (NE1) einen Teiler und einen Kombinierer umfasst, das elektrische Netzwerkelement (NE2) eine fünfte Schnittstelle (I5) eines elektrischen Regenerators des elektrischen Netzwerkelements (NE2) umfasst und das Verfahren die folgenden Schritte umfasst:
Konfigurieren, durch das optische Netzwerkelement (NE1), der fünften Schnittstelle (I5) als eine Fernschnittstelle der dritten Schnittstelle (I3) oder automatisches Feststellen, unter Verwendung des Verbindungsverwaltungsprotokolls, LMP, dass die fünfte Schnittstelle (I5) eine Fernschnittstelle der dritten Schnittstelle (I3) ist, wobei der Kombinierer der dritten Schnittstelle (I3) eine Eingangsschnittstelle des optischen Netzwerkelements (NE1) bereitstellt und der Teiler der dritten Schnittstelle (I3) eine Ausgangsschnittstelle des optischen Netzwerkelements (NE1) für eine Kommunikation mit der fünften Schnittstelle (I5) bereitstellt,
Empfangen, durch das optische Netzwerkelement (NE1), einer Eigenschaft der fünften Schnittstelle (I5), die durch das elektrische Netzwerkelement (NE2) unter Verwendung des LMP-Protokolls gesendet wird;
Abbilden (101), durch das optische Netzwerkelement (NE1), der empfangenen Eigenschaft der fünften Schnittstelle (I5) zu einer Eigenschaft der dritten Schnittstelle (13), wobei die Eigenschaft verbindungsunterstützte Wellenlängenkapazität, Ressourcenbandbreiteninformationen, Verbindungszustand und optischen Schaden umfasst;
Benachrichtigen (102), durch das optische Netzwerkelement, mittels Überflutens unter Verwendung von Routing, aller optischen Netzwerkelemente auf einem optischen Netzwerk, auf dem sich das optische Netzwerkelement (NE1) befindet, über die Eigenschaft der dritten Schnittstelle (I3);
Empfangen (103), durch das optische Netzwerkelement (NE1), von Routing-Informationen, die in einer erweiterten Signalisierung geführt werden, mittels eines expliziten Routenobjekts bzw. ERO in einem Ressourcenreservierungsprotokoll bzw. RSVP, wobei eine Route mittels einer Berechnung durch einen ersten Versorgungsknoten oder einen Routenberechnungsserver gemäß allen Ressourcen und Topologien des Netzwerks erhalten wird, wobei alle Ressourcen und Topologien des Netzwerks die Eigenschaft der dritten Schnittstelle (I3) umfassen und wobei die Routing-Informationen, die in der erweiterten Signalisierung geführt werden, zumindest eine Knotenkennung des optischen Netzwerkelements (NE1) und einen Index der ersten Schnittstelle (I1), einen Index einer zweiten Schnittstelle (I2), einen Index der dritten Schnittstelle (I3), eine Eingangsrichtungswellenlänge (λ1) der ersten Schnittstelle (I1) und eine Ausgangsrichtungswellenlänge (λ2) der zweiten Schnittstelle (I2) des optischen Netzwerkelements (NE1) umfassen;
Erstellen (104), durch das optische Netzwerkelement (NE1), einer ersten lokalen Wellenlängenverbindung in eine erste Richtung gemäß dem Index der ersten Schnittstelle (I1), der Eingangsrichtungswellenlänge (λ1) der ersten Schnittstelle (I1) und dem Index der dritten Schnittstelle (I3), die in der erweiterten Signalisierung enthalten sind, wobei die erste lokale Wellenlängenverbindung von der ersten Schnittstelle (I1) zur dritten Schnittstelle (I3) unter Verwendung der Eingangswellenlänge (λ1) der ersten Schnittstelle (I1) verbunden ist, und Erstellen einer zweiten lokalen Wellenlängenverbindung in die erste Richtung gemäß dem Index der dritten Schnittstelle (I3), dem Index der zweiten Schnittstelle (I2) und der Ausgangswellenlänge der zweiten Schnittstelle (I2), die in der erweiterten Signalisierung enthalten sind, wobei die zweite lokale Wellenlängenverbindung von der dritten Schnittstelle (I3) zur zweiten Schnittstelle (I2) unter Verwendung der Ausgangswellenlänge (λ2) der zweiten Schnittstelle (I2) verbunden ist und die erste Richtung eine Richtung von einer Eingangsrichtung der ersten Schnittstelle (I1) zu einer Ausgangsrichtung der zweiten Schnittstelle (I2) ist; und
Zustellen (105), durch das optische Netzwerkelement (NE1), einer Nachricht zum elektrischen Netzwerkelement (NE2), wobei die Nachricht zumindest eine Knotenkennung, NODEID, den Index der dritten Schnittstelle (I3), eine Eingangsrichtungswellenlänge (λ2) der dritten Schnittstelle (I3) und eine Ausgangsrichtungswellenlänge (λ1) der dritten Schnittstelle (I3) des optischen Netzwerkelements (NE1) umfasst oder wobei die Nachricht eine Knotenkennung, NODEID, einen Index der fünften Schnittstelle (I5), eine Eingangsrichtungswellenlänge (λ1) der fünften Schnittstelle (I5) und eine Ausgangsrichtungswellenlänge (λ2) der fünften Schnittstelle (I5) des elektrischen Netzwerkelements (NE2) umfasst, so dass das elektrische Netzwerkelement (NE2) eine lokale Wellenlängenverbindung von der Eingangsrichtungswellenlänge (λ1) der fünften Schnittstelle (I5) zur Ausgangsrichtungswellenlänge (λ2) der fünften Schnittstelle (I5) gemäß der Nachricht erstellt.

2. Verfahren nach Anspruch 1, wobei das optische Netzwerkelement (NE1) eine vierte Schnittstelle (I4) umfasst, die vierte Schnittstelle des optischen Netzwerkelements (NE1) einen Teiler und einen Kombinierer umfasst, das elektrische Netzwerkelement (NE2) eine sechste Schnittstelle (I6) des elektrischen Regenerators des elektrischen Netzwerkelements (NE2) umfasst und das Verfahren ferner die folgenden Schritte umfasst:
Konfigurieren, durch das optische Netzwerkelement (NE1), der sechsten Schnittstelle (I6) als eine Fernschnittstelle der vierten Schnittstelle (I4) oder automatisches Feststellen, unter Verwendung des LMP-Protokolls, dass die sechste Schnittstelle (I6) eine Fernschnittstelle der vierten Schnittstelle (I4) ist, wobei der Kombinierer der vierten Schnittstelle (I4) eine Eingangsschnittstelle des optischen Netzwerkelements (NE1) bereitstellt und der Teiler der vierten Schnittstelle (I4) eine Ausgangsschnittstelle des optischen Netzwerkelements (NE1) für eine Kommunikation mit der sechsten Schnittstelle (I6) bereitstellt;
Empfangen, durch das optische Netzwerkelement (NE1), einer Eigenschaft der vierten Schnittstelle (I4), die durch das elektrische Netzwerkelement (NE2) unter Verwendung des LMP-Protokolls gesendet wird; und
Abbilden (501), durch das optische Netzwerkelement (NE1), der empfangenen Eigenschaft der sechsten Schnittstelle (I6) zu einer Eigenschaft der vierten Schnittstelle (I4), wobei die Eigenschaft verbindungsunterstützte Wellenlängenkapazität, Ressourcenbandbreiteninformationen, Verbindungszustand und optischen Schaden umfasst;
Benachrichtigen (502), durch das optische Netzwerkelement (NE1), mittels Überflutens unter Verwendung von Routing, aller optischen Netzwerkelemente auf dem optischen Netzwerk, auf dem sich das optische Netzwerkelement (NE1) befindet, über die Eigenschaft der vierten Schnittstelle (I4);
Empfangen (503), durch das optische Netzwerkelement (NE1), von Routing-Informationen, die in einer erweiterten Signalisierung geführt werden, mittels eines ERO-Objekts in einem RSVP-Protokoll, wobei die Route mittels einer Berechnung durch den ersten Versorgungsknoten oder den Routenberechnungsserver gemäß der Eigenschaft der vierten Schnittstelle (I4) erhalten wird und die erweiterte Signalisierung zumindest die Knotenkennung, NODEID, den Index der zweiten Schnittstelle (I2), den Index einer ersten Schnittstelle (I1), einen Index der vierten Schnittstelle (I4), eine Eingangsrichtungswellenlänge (λ2) der zweiten Schnittstelle (I2) und eine Ausgangsrichtungswellenlänge (λ1) der ersten Schnittstelle (I1) des optischen Netzwerkelements (NE1) umfasst;
Erstellen (504), durch das optische Netzwerkelement (NE1), einer ersten lokalen Wellenlängenverbindung in eine zweite Richtung gemäß dem Index der zweiten Schnittstelle (I2), der Eingangsrichtungswellenlänge (λ2) der zweiten Schnittstelle (I2) und dem Index der vierten Schnittstelle (I4), die in der erweiterten Signalisierung enthalten sind, und Erstellen einer zweiten lokalen Wellenlängenverbindung in die zweite Richtung gemäß dem Index der vierten Schnittstelle (I4), dem Index der ersten Schnittstelle (I1) und der Ausgangsrichtungswellenlänge (λ1) der ersten Schnittstelle (I1), die in der erweiterten Signalisierung enthalten sind, wobei die zweite Richtung eine Richtung von einer Eingangsrichtung der zweiten Schnittstelle (I2) zu einer Ausgangsrichtung der ersten Schnittstelle (I1) ist; und
Zustellen (505), durch das optische Netzwerkelement (NE1), einer Nachricht, wobei die Nachricht zumindest die NODEID, den Index der vierten Schnittstelle (I4), eine Ausgangsrichtungswellenlänge (λ2) der vierten Schnittstelle (I4) und eine Eingangsrichtungswellenlänge (λ1) der vierten Schnittstelle (I4) des optischen Netzwerkelements (NE1) umfasst oder wobei die Nachricht die NODEID, einen Index der sechsten Schnittstelle (I6), eine Eingangsrichtungswellenlänge (λ2) der sechsten Schnittstelle (I6) und eine Ausgangsrichtungswellenlänge (λ1) der sechsten Schnittstelle (I6) des elektrischen Netzwerkelements (NE2) umfasst, so dass das elektrische Netzwerkelement (NE2) eine Wellenlängenverbindung von der Eingangsrichtungswellenlänge (λ2) der sechsten Schnittstelle (I6) zur Ausgangsrichtungswellenlänge (λ1) der sechsten Schnittstelle (I6) gemäß der Nachricht erstellt.

3. Signalisierungserstellungsverfahren zur Verwendung in einem System, das ein optisches Netzwerkelement (NE1) und ein elektrisches Netzwerkelement (NE2) umfasst, wobei das optische Netzwerkelement (NE1) eine erste Schnittstelle (I1), eine zweite Schnittstelle (I2) und eine dritte Schnittstelle (I3) umfasst, jede Schnittstelle (I1, I2, I3) des optischen Netzwerkelements (NE1) einen Teiler und einen Kombinierer umfasst, das elektrische Netzwerkelement (NE2) eine fünfte Schnittstelle (I5) eines elektrischen Regenerators des elektrischen Netzwerkelements (NE2) umfasst und das Verfahren die folgenden Schritte umfasst:
Empfangen (601), durch das elektrische Netzwerkelement (NE2), einer Nachricht, die durch ein optisches Netzwerkelement (NE1) zugestellt wird; und
Erstellen (602), durch das elektrische Netzwerkelement (NE2) gemäß der Nachricht, einer lokalen Wellenlängenverbindung von einer Eingangsrichtungswellenlänge (λ1) der fünften Schnittstelle (I5) zu einer Ausgangsrichtungswellenlänge (λ2) der fünften Schnittstelle (I5) für das elektrische Netzwerkelement (NE2) in eine erste Richtung, wobei die Nachricht zumindest eine Knotenkennung, NODEID, einen Index einer dritten Schnittstelle (I3), wobei der Kombinierer der dritten Schnittstelle (I3) eine Eingangsschnittstelle des optischen Netzwerkelements (NE1) bereitstellt und der Teiler der dritten Schnittstelle (I3) eine Ausgangsschnittstelle des optischen Netzwerkelements (NE1) für eine Kommunikation mit der fünften Schnittstelle (I5) bereitstellt, eine Eingangsrichtungswellenlänge (λ2) der dritten Schnittstelle (I3) und eine Ausgangsrichtungswellenlänge (λ1) der dritten Schnittstelle (I3) des optischen Netzwerkelements (NE1) umfasst oder wobei die Nachricht eine Knotenkennung, NODEID, einen Index der fünften Schnittstelle (I5), die Eingangsrichtungswellenlänge (λ1) der fünften Schnittstelle (I5) und die Ausgangsrichtungswellenlänge (λ2) der fünften Schnittstelle (I5) des elektrischen Netzwerkelements (NE2) umfasst und die erste Richtung eine Richtung von einer Eingangsrichtung der fünften Schnittstelle (I5) zu einer Ausgangsrichtung der fünften Schnittstelle (I5) ist.

4. Verfahren nach Anspruch 3, wobei das Erstellen (602), durch das elektrische Netzwerkelement (NE2) gemäß der Nachricht, einer lokalen Wellenlängenverbindung für das elektrische Netzwerkelement (NE2) in eine erste Richtung Folgendes umfasst:
wenn die Nachricht die NODEID, die Eingangsrichtungswellenlänge (λ2) der dritten Schnittstelle (I3), die Ausgangsrichtungswellenlänge (λ1) der dritten Schnittstelle (I3) und den Index der dritten Schnittstelle (I3) des optischen Netzwerkelements (NE1) umfasst, Finden, durch das elektrische Netzwerkelement (NE2) gemäß der NODEID und dem Index der dritten Schnittstelle (I3) des optischen Netzwerkelements (NE1), die in der Nachricht geführt werden, des Index der fünften Schnittstelle (I5) des elektrischen Netzwerkelements (NE2), wobei eine Bedingung für das Finden darin besteht, dass die fünfte Schnittstelle (I5) eine Fernschnittstelle der dritten Schnittstelle (I3) ist; und
Erstellen der lokalen Wellenlängenverbindung für das elektrische Netzwerkelement (NE2) in die erste Richtung gemäß dem Index der fünften Schnittstelle (15), der Eingangsrichtungswellenlänge (λ2) der dritten Schnittstelle (I3) und der Ausgangsrichtungswellenlänge (λ1) der dritten Schnittstelle (I3).

5. Verfahren nach einem der Ansprüche 3 oder 4, wobei das optische Netzwerkelement (NE1) eine vierte Schnittstelle (I4) umfasst, die vierte Schnittstelle des optischen Netzwerkelements (NE1) einen Teiler und einen Kombinierer umfasst, das elektrische Netzwerkelement (NE2) eine sechste Schnittstelle (I6) des elektrischen Regenerators des elektrischen Netzwerkelements (NE2) umfasst und das Verfahren ferner die folgenden Schritte umfasst:
Empfangen, durch das elektrische Netzwerkelement (NE2), einer Nachricht, die durch das optische Netzwerkelement (NE1) zugestellt wird; und
Erstellen, durch das elektrische Netzwerkelement (NE2), gemäß der Nachricht, einer lokalen Wellenlängenverbindung von einer Eingangsrichtungswellenlänge (λ2) der sechsten Schnittstelle (I6) zu einer Ausgangsrichtungswellenlänge (λ1) der sechsten Schnittstelle (I6) für das elektrische Netzwerkelement (NE2) in eine zweite Richtung, wobei die Nachricht zumindest die NODEID, einen Index der vierten Schnittstelle (I4), eine Ausgangsrichtungswellenlänge (λ2) der vierten Schnittstelle (I4) und eine Eingangsrichtungswellenlänge (λ1) der vierten Schnittstelle (I4) des optischen Netzwerkelements (NE1) umfasst oder wobei die Nachricht die NODEID, einen Index einer sechsten Schnittstelle (I6), eine Eingangsrichtungswellenlänge (λ2) der sechsten Schnittstelle (I6) und eine Ausgangsrichtungswellenlänge (λ1) der sechsten Schnittstelle (I6) des elektrischen Netzwerkelements (NE2) umfasst.

6. Optisches Netzwerkelement (NE1) zur Verwendung in einem System, das das optische Netzwerkelement (NE1) und ein elektrisches Netzwerkelement (NE2) umfasst, wobei das optische Netzwerkelement (NE1) eine erste Schnittstelle (I1), eine zweite Schnittstelle (I2) und eine dritte Schnittstelle (I3) umfasst, jede Schnittstelle (I1, I2, I3) des optischen Netzwerkelements (NE1) einen Teiler und einen Kombinierer umfasst, und das elektrische Netzwerkelement (NE2) eine fünfte Schnittstelle (I5) eines elektrischen Regenerators des elektrischen Netzwerkelements (NE2) umfasst, wobei das optische Netzwerkelement (NE1) ferner Folgendes umfasst:
eine erste Abbildungseinheit (701), wobei die erste Abbildungseinheit (701) Folgendes umfasst:
eine Konfigurations- und Feststellungseinheit (801), die dazu konfiguriert ist, dem optischen Netzwerkelement (NE1) zu ermöglichen, die fünfte Schnittstelle (I5) als eine Fernschnittstelle der dritten Schnittstelle (I3) zu konfigurieren oder unter Verwendung des Verbindungsverwaltungsprotokolls, LMP, automatisch festzustellen, dass die fünfte Schnittstelle (I5) eine Fernschnittstelle der dritten Schnittstelle (I3) ist;
eine Empfangseinheit (802), die dazu konfiguriert ist, dem optischen Netzwerkelement (NE1) zu ermöglichen, eine Eigenschaft der fünften Schnittstelle (I5), die durch das elektrische Netzwerkelement (NE2) unter Verwendung des LMP-Protokolls gesendet wird, zu empfangen; und
eine Abbildungseinheit (803), die dazu konfiguriert ist, dem optischen Netzwerkelement (NE1) zu ermöglichen, die empfangene Eigenschaft der fünften Schnittstelle (I5) zu einer Eigenschaft einer dritten Schnittstelle (I3) abzubilden, wobei die Eigenschaft verbindungsunterstützte Wellenlängenkapazität, Ressourcenbandbreiteninformationen, Verbindungszustand und optischen Schaden umfasst;
eine erste Routing-Überflutungseinheit (702), die dazu konfiguriert ist, dem optischen Netzwerkelement zu ermöglichen, alle optischen Netzwerkelemente auf einem optischen Netzwerk, auf dem sich das optische Netzwerkelement (NE1) befindet, über die Eigenschaft der dritten Schnittstelle (I3) mittels Überflutens unter Verwendung von Routing zu benachrichtigen;
eine erste Signalisierungsempfangseinheit (703), die dazu konfiguriert ist, dem optischen Netzwerkelement zu ermöglichen, Routing-Informationen, die in einer erweiterten Signalisierung geführt werden, mittels eines expliziten Routenobjekts, ERO, in einem Ressourcenreservierungsprotokoll, RSVP, zu empfangen, wobei eine Route mittels einer Berechnung durch einen ersten Versorgungsknoten oder einen Routenberechnungsserver gemäß allen Ressourcen und Topologien des Netzwerks erhalten wird, wobei alle Ressourcen und Topologien des Netzwerks die Eigenschaft der dritten Schnittstelle (I3) umfassen und wobei die Routing-Informationen, die in der erweiterten Signalisierung geführt werden, zumindest eine Knotenkennung, einen Index einer ersten Schnittstelle (I1), einen Index einer zweiten Schnittstelle (I2), einen Index der dritten Schnittstelle (I3), eine Eingangsrichtungswellenlänge (λ1) der ersten Schnittstelle (I1) und eine Ausgangsrichtungswellenlänge (λ2) der zweiten Schnittstelle (I2) des optischen Netzwerkelements (NE1) umfassen;
eine erste Erstelleinheit (704), die dazu konfiguriert ist, dem optischen Netzwerkelement (NE1) zu ermöglichen, eine erste lokale Wellenlängenverbindung in eine erste Richtung gemäß dem Index der ersten Schnittstelle (I1), der Eingangsrichtungswellenlänge (λ1) der ersten Schnittstelle (I1) und dem Index der dritten Schnittstelle (I3), die in der erweiterten Signalisierung enthalten sind, zu erstellen, wobei die erste lokale Wellenlängenverbindung von der ersten Schnittstelle (I1) zur dritten Schnittstelle (I3) unter Verwendung der Eingangswellenlänge (λ1) der ersten Schnittstelle (I1) verbunden ist, und eine zweite lokale Wellenlängenverbindung in die erste Richtung gemäß dem Index der dritten Schnittstelle (I3), dem Index der zweiten Schnittstelle (I2) und der Ausgangswellenlänge (λ2) der zweiten Schnittstelle (I2), die in der erweiterten Signalisierung enthalten sind, zu erstellen, wobei die zweite lokale Wellenlängenverbindung von der dritten Schnittstelle (I3) zur zweiten Schnittstelle (I2) unter Verwendung der Ausgangswellenlänge (λ2) der zweiten Schnittstelle (I2) verbunden ist und die erste Richtung eine Richtung von einer Eingangsrichtung der ersten Schnittstelle (I1) zu einer Ausgangsrichtung der zweiten Schnittstelle (I2) ist; und
eine erste Zustellungseinheit (705), die dazu konfiguriert ist, dem optischen Netzwerkelement (NE1) zu ermöglichen, eine Nachricht zum elektrischen Netzwerkelement (NE2) zuzustellen, wobei die Nachricht zumindest eine Knotenkennung, NODEID, den Index der dritten Schnittstelle (I3), eine Eingangsrichtungswellenlänge (λ1) der dritten Schnittstelle (I3) und eine Ausgangsrichtungswellenlänge (λ2) der dritten Schnittstelle (I3) des optischen Netzwerkelements umfasst oder wobei die Nachricht eine Knotenkennung, NODEID, einen Index der fünften Schnittstelle (I5), eine Eingangsrichtungswellenlänge (λ1) der fünften Schnittstelle (I5) und eine Ausgangsrichtungswellenlänge (λ2) der fünften Schnittstelle (I5) des elektrischen Netzwerkelements (NE2) umfasst, so dass das elektrische Netzwerkelement (NE2) eine lokale Wellenlängenverbindung von der Eingangsrichtungswellenlänge (λ1) der fünften Schnittstelle (I5) zur Ausgangsrichtungswellenlänge (λ2) der fünften Schnittstelle (I5) gemäß der Nachricht erstellt.

7. Optisches Netzwerkelement (NE1) nach Anspruch 6, wobei das optische Netzwerkelement (NE1) eine vierte Schnittstelle (I4) umfasst, die vierte Schnittstelle des optischen Netzwerkelements (NE1) einen Teiler und einen Kombinierer umfasst, das elektrische Netzwerkelement (NE2) eine sechste Schnittstelle (I6) des elektrischen Regenerators des elektrischen Netzwerkelements (NE2) umfasst und das optische Netzwerkelement (NE1) ferner Folgendes umfasst:
eine zweite Abbildungseinheit (901), wobei die zweite Abbildungseinheit (901) Folgendes umfasst:
eine zweite Konfigurations- und Feststellungseinheit, die dazu konfiguriert ist, dem optischen Netzwerkelement (NE1) zu ermöglichen, die sechste Schnittstelle (I6) als eine Fernschnittstelle der vierten Schnittstelle (I4) zu konfigurieren oder automatisch festzustellen, unter Verwendung des Verbindungsverwaltungsprotokolls, LMP, dass die sechste Schnittstelle (I6) eine Fernschnittstelle der vierten Schnittstelle (I4) ist;
eine zweite Empfangseinheit, die dazu konfiguriert ist, dem optischen Netzwerkelement (NE1) zu ermöglichen, eine Eigenschaft der sechsten Schnittstelle (I6), die durch das elektrische Netzwerkelement (NE2) unter Verwendung des LMP-Protokolls gesendet wird, zu empfangen; und
eine zweite Abbildungseinheit, die dazu konfiguriert ist, dem optischen Netzwerkelement (NE1) zu ermöglichen, eine Eigenschaft einer sechsten Schnittstelle (I6) zu einer Eigenschaft einer vierten Schnittstelle (I4) abzubilden, wobei die Eigenschaft verbindungsunterstützte Wellenlängenkapazität, Ressourcenbandbreiteninformationen, Verbindungszustand und optischen Schaden umfasst;
eine zweite Routing-Überflutungseinheit (902), die dazu konfiguriert ist, dem optischen Netzwerkelement (NE1) zu ermöglichen, alle optischen Netzwerkelemente auf dem optischen Netzwerk, auf dem sich das optische Netzwerkelement (NE1) befindet, mittels Überflutens unter Verwendung von Routing über die Eigenschaft der vierten Schnittstelle (I4) zu benachrichtigen;
eine zweite Signalisierungsempfangseinheit (903), die dazu konfiguriert ist, dem optischen Netzwerkelement (NE1) zu ermöglichen, Routing-Informationen, die in einer erweiterten Signalisierung geführt werden, mittels eines ERO-Objekts in einem RSVP-Protokoll zu empfangen, wobei die Route mittels einer Berechnung durch den ersten Versorgungsknoten oder den Routenberechnungsserver gemäß der Eigenschaft der vierten Schnittstelle (14) erhalten wird und die erweiterte Signalisierung zumindest die Knotenkennung, NODEID, den Index der zweiten Schnittstelle (I2), den Index der ersten Schnittstelle (I1), einen Index der vierten Schnittstelle (I4), eine Eingangsrichtungswellenlänge (λ2) der zweiten Schnittstelle (I2) und eine Ausgangsrichtungswellenlänge (λ1) der ersten Schnittstelle (I1) des optischen Netzwerkelements (NE1) umfasst;
eine zweite Erstelleinheit (904), die dazu konfiguriert ist, dem optischen Netzwerkelement (NE1) zu ermöglichen, eine erste lokale Wellenlängenverbindung in eine zweite Richtung gemäß dem Index der zweiten Schnittstelle (I2), der Eingangswellenlänge (λ2) der zweiten Schnittstelle (I2) und dem Index der vierten Schnittstelle (I4), die in der erweiterten Signalisierung enthalten sind, zu erstellen und eine zweite lokale Wellenlängenverbindung in die zweite Richtung gemäß dem Index der vierten Schnittstelle (I4), dem Index der ersten Schnittstelle (I1) und der Ausgangswellenlänge (λ1) der ersten Schnittstelle (I1), die in der erweiterten Signalisierung enthalten sind, zu erstellen, wobei die zweite Richtung eine Richtung von einer Eingangsrichtung der zweiten Schnittstelle (I2) zu einer Ausgangsrichtung der ersten Schnittstelle (I1) ist; und
eine zweite Zustellungseinheit (905), die dazu konfiguriert ist, dem optischen Netzwerkelement (NE1) zu ermöglichen, eine Nachricht zuzustellen, wobei die Nachricht zumindest die NODEID, den Index der vierten Schnittstelle (I4), eine Ausgangsrichtungswellenlänge (λ2) der vierten Schnittstelle (I4) und eine Eingangsrichtungswellenlänge (λ1) der vierten Schnittstelle (I4) des optischen Netzwerkelements (NE1) umfasst oder wobei die Nachricht die NODEID, einen Index der sechsten Schnittstelle (I6), eine Eingangsrichtungswellenlänge (λ2) der sechsten Schnittstelle (I6) und eine Ausgangsrichtungswellenlänge (λ1) der sechsten Schnittstelle (I6) des elektrischen Netzwerkelements (NE2) umfasst, so dass das elektrische Netzwerkelement (NE2) eine Wellenlängenverbindung von der Eingangsrichtungswellenlänge (A2) der sechsten Schnittstelle (I6) zur Ausgangsrichtungswellenlänge (λ1) der sechsten Schnittstelle (I6) gemäß der Nachricht erstellt.

8. Elektrisches Netzwerkelement (NE2) zur Verwendung in einem System, das ein optisches Netzwerkelement (NE1) und das elektrische Netzwerkelement (NE2) umfasst, wobei das optische Netzwerkelement (NE1) eine erste Schnittstelle (I1), eine zweite Schnittstelle (I2) und eine dritte Schnittstelle (I3) umfasst, jede Schnittstelle (I1, I2, I3) des optischen Netzwerkelements (NE1) einen Teiler und einen Kombinierer umfasst, und das elektrische Netzwerkelement (NE2) eine fünfte Schnittstelle (I5) eines elektrischen Regenerators des elektrischen Netzwerkelements (NE2) umfasst, und wobei das elektrische Netzwerkelement (NE2) ferner Folgendes umfasst:
eine erste Nachrichtenempfangseinheit (1001), die dazu konfiguriert ist, dem elektrischen Netzwerkelement (NE2) zu ermöglichen, eine Nachricht, die durch ein optisches Netzwerkelement (NE1) zugestellt wird, zu empfangen; und
eine dritte Erstelleinheit (1002), die dazu konfiguriert ist, dem elektrischen Netzwerkelement (NE2) zu ermöglichen, eine lokale Wellenlängenverbindung von einer Eingangsrichtungswellenlänge (λ1) der fünften Schnittstelle (I5) zu einer Ausgangsrichtungswellenlänge (λ2) der fünften Schnittstelle (I5) für das elektrische Netzwerkelement (NE2) in eine erste Richtung gemäß der Nachricht zu erstellen, wobei die Nachricht zumindest eine Knotenkennung NODEID, einen Index einer dritten Schnittstelle (I3), wobei der Kombinierer der dritten Schnittstelle (I3) eine Eingangsschnittstelle des optischen Netzwerkelements (NE1) bereitstellt und der Teiler der dritten Schnittstelle (I3) eine Ausgangsschnittstelle des optischen Netzwerkelements (NE1) für eine Kommunikation mit der fünften Schnittstelle (I5) bereitstellt, eine Eingangsrichtungswellenlänge (λ2) der dritten Schnittstelle (I3) und eine Ausgangsrichtungswellenlänge (λ1) der dritten Schnittstelle (I3) des optischen Netzwerkelements (NE1) umfasst oder wobei die Nachricht eine Knotenkennung NODEID, einen Index der fünften Schnittstelle (I5), eine Eingangsrichtungswellenlänge (λ1) der fünften Schnittstelle (I5) und eine Ausgangsrichtungswellenlänge (λ2) der fünften Schnittstelle (I5) des elektrischen Netzwerkelements (NE2) umfasst und die erste Richtung eine Richtung von einer Eingangsrichtung der fünften Schnittstelle (I5) zu einer Ausgangsrichtung der fünften Schnittstelle (I5) ist.

9. Elektrisches Netzwerkelement (NE2) nach Anspruch 8, wobei die dritte Erstelleinheit (1002) spezifisch zu Folgendem konfiguriert ist:
wenn die Nachricht die NODEID, die Eingangsrichtungswellenlänge (λ2) der dritten Schnittstelle (I3), die Ausgangsrichtungswellenlänge (λ1) der dritten Schnittstelle (I3) und den Index der dritten Schnittstelle (13) des optischen Netzwerkelements (NE1) umfasst, dem elektrischen Netzwerkelement (NE2) zu ermöglichen, den Index der fünften Schnittstelle (I5) des elektrischen Netzwerkelements (NE2) gemäß der NODEID und dem Index der dritten Schnittstelle (I3) des optischen Netzwerkelements (NE1), die in der Nachricht geführt werden, zu finden, wobei eine Bedingung für das Finden darin besteht, dass die fünfte Schnittstelle (I5) eine Fernschnittstelle der dritten Schnittstelle (I3) ist; und
die lokale Wellenlängenverbindung für das elektrische Netzwerkelement (NE2) in die erste Richtung gemäß dem Index der fünften Schnittstelle (I5), der Eingangsrichtungswellenlänge (λ2) der dritten Schnittstelle (I3) und der Ausgangsrichtungswellenlänge (λ1) der dritten Schnittstelle (I3) zu erstellen.

10. Elektrisches Netzwerkelement (NE2) nach einem der Ansprüche 8 oder 9, wobei das optische Netzwerkelement (NE1) eine vierte Schnittstelle (I4) umfasst, die vierte Schnittstelle des optischen Netzwerkelements (NE1) einen Teiler und einen Kombinierer umfasst, das elektrische Netzwerkelement (NE2) eine sechste Schnittstelle (I6) des elektrischen Regenerators des elektrischen Netzwerkelements (NE2) umfasst und das elektrische Netzwerkelement (NE2) ferner Folgendes umfasst:
eine zweite Nachrichtenempfangseinheit, die dazu konfiguriert ist, dem elektrischen Netzwerkelement (NE2) zu ermöglichen, eine Nachricht, die durch das optische Netzwerkelement (NE1) zugestellt wird, zu empfangen; und
eine vierte Erstelleinheit, die dazu konfiguriert ist, dem elektrischen Netzwerkelement (NE2) zu ermöglichen, eine lokale Wellenlängenverbindung von einer Eingangsrichtungswellenlänge (λ2) der sechsten Schnittstelle (I6) zu einer Ausgangsrichtungswellenlänge (λ1) der sechsten Schnittstelle (I6) für das elektrische Netzwerkelement (NE2) in eine zweite Richtung gemäß der Nachricht zu erstellen, wobei die Nachricht zumindest die NODEID, einen Index der vierten Schnittstelle (I4), eine Ausgangsrichtungswellenlänge (λ2) der vierten Schnittstelle (I4) und eine Eingangsrichtungswellenlänge (λ1) der vierten Schnittstelle (I4) des optischen Netzwerkelements (NE1) umfasst oder wobei die Nachricht die NODEID, einen Index einer sechsten Schnittstelle (I6), eine Eingangsrichtungswellenlänge (λ2) der sechsten Schnittstelle (I6) und eine Ausgangsrichtungswellenlänge (λ1) der sechsten Schnittstelle (I6) des elektrischen Netzwerkelements (NE2) umfasst.

## Revendications

1. Procédé d'établissement de signalisation destiné à être utilisé dans un système comprenant un élément de réseau optique (NE1) et un élément de réseau électrique (NE2), dans lequel l'élément de réseau optique (NE1) comprend une première interface (I1), une deuxième interface (I2) et une troisième interface (I3), chaque interface (I1, I2, I3) de l'élément de réseau optique (NE1) comprend un diviseur et un combinateur, l'élément de réseau électrique (NE2) comprend une cinquième interface (I5) d'un régénérateur électrique de l'élément de réseau électrique (NE2), et le procédé comprend les étapes suivantes :
la configuration, par l'élément de réseau optique (NE1), de la cinquième interface (I5) en tant qu'interface à distance de la troisième interface (I3), ou la découverte automatique, en utilisant le protocole de gestion de liaison, LMP, que la cinquième interface (I5) est une interface à distance de la troisième interface (I3), dans lequel le combinateur de la troisième interface (I3) fournit une interface amont de l'élément de réseau optique (NE1) et le diviseur de la troisième interface (I3) fournit une interface aval de l'élément de réseau optique (NE1) pour une communication avec la cinquième interface (I5),
la réception, par l'élément de réseau optique (NE1), d'une propriété de la cinquième interface (I5) qui est envoyée par l'élément de réseau électrique (NE2), en utilisant le protocole LMP ;
la mise en correspondance (101), par l'élément de réseau optique (NE1), de la propriété reçue de la cinquième interface (I5) avec une propriété de la troisième interface (I3), dans lequel la propriété comprend une capacité de longueur d'onde prise en charge par liaison, des informations de bande passante de ressources, un état de liaison et un dommage optique ;
l'information (102), par l'élément de réseau optique, au moyen d'un acheminement par inondation en utilisant un routage, de tous les éléments de réseau optique sur un réseau optique sur lequel l'élément de réseau optique (NE1) est situé, de la propriété de la troisième interface (I3) ;
la réception (103), par l'élément de réseau optique (NE1), d'informations de routage transportées dans une signalisation étendue au moyen d'un objet de route explicite, ERO, dans un protocole de réservation de ressources, RSVP, dans lequel une route est obtenue au moyen d'un calcul par un premier noeud de service ou un serveur de calcul de route selon toutes les ressources et les topologies du réseau, dans lequel toutes les ressources et les topologies du réseau comprennent la propriété de la troisième interface (I3), et dans lequel les informations de routage transportées dans la signalisation étendue comprennent au moins un identifiant de noeud de l'élément de réseau optique (NE1), et un indice de la première interface (I1), un indice d'une deuxième interface (I2), un indice de la troisième interface (I3), une longueur d'onde de direction amont (λ1) de la première interface (I1), et une longueur d'onde de direction aval (λ2) de la deuxième interface (I2) de l'élément de réseau optique (NE1) ;
l'établissement (104), par l'élément de réseau optique (NE1), d'une première connexion de longueur d'onde locale dans une première direction selon l'indice de la première interface (I1), la longueur d'onde de direction amont (λ1) de la première interface (I1), et l'indice de la troisième interface (I3) qui sont compris dans la signalisation étendue, dans lequel la première connexion de longueur d'onde locale est connectée de la première interface (I1) à la troisième interface (I3) en utilisant la longueur d'onde amont (λ1) de la première interface (I1), et l'établissement d'une seconde connexion de longueur d'onde locale dans la première direction selon l'indice de la troisième interface (I3), l'indice de la deuxième interface (I2) et la longueur d'onde aval de la deuxième interface (I2) qui sont compris dans la signalisation étendue, dans lequel la seconde connexion de longueur d'onde locale est connectée de la troisième interface (I3) à la deuxième interface (I2) en utilisant la longueur d'onde aval (λ2) de la deuxième interface (I2), et la première direction est une direction allant d'une direction amont dans la première interface (I1) à une direction aval de la deuxième interface (I2) ; et
la distribution (105), par l'élément de réseau optique (NE1), d'un message à l'élément de réseau électrique (NE2), dans lequel le message comprend au moins un identifiant de noeud, NODEID, l'indice de la troisième interface (I3), une longueur d'onde de direction amont (λ2) de la troisième interface (I3), et une longueur d'onde de direction aval (λ1) de la troisième interface (I3) de l'élément de réseau optique (NE1), ou dans lequel le message comprend un identifiant de noeud, NODEID, un indice de la cinquième interface (I5), une longueur d'onde de direction amont (λ1) de la cinquième interface (I5), et une longueur d'onde de direction aval (λ2) de la cinquième interface (I5) de l'élément de réseau électrique (NE2), de sorte que l'élément de réseau électrique (NE2) établisse une connexion de longueur d'onde locale allant de la longueur d'onde de direction amont (λ1) de la cinquième interface (I5) à la longueur d'onde de direction aval (λ2) de la cinquième interface (I5) selon le message.

2. Procédé selon la revendication 1, dans lequel l'élément de réseau optique (NE1) comprend une quatrième interface (I4), la quatrième interface de l'élément de réseau optique (NE1) comprend un diviseur et un combinateur, l'élément de réseau électrique (NE2) comprend une sixième interface (I6) du régénérateur électrique de l'élément de réseau électrique (NE2), et le procédé comprend en outre les étapes suivantes :
la configuration, par l'élément de réseau optique (NE1), de la sixième interface (I6) en tant qu'interface à distance de la quatrième interface (I4), ou la découverte automatique, en utilisant le protocole LMP, que la sixième interface (I6) est une interface à distance de la quatrième interface (I4) dans lequel le combinateur de la quatrième interface (I4) fournit une interface amont de l'élément de réseau optique (NE1) et le diviseur de la quatrième interface (I4) fournit une interface aval de l'élément de réseau optique (NE1) pour une communication avec la sixième interface (I6) ;
la réception, par l'élément de réseau optique (NE1), d'une propriété de la quatrième interface (I4) qui est envoyée par l'élément de réseau électrique (NE2) en utilisant le protocole LMP ; et
la mise en correspondance (501), par l'élément de réseau optique (NE1), de la propriété reçue de la sixième interface (I6) avec une propriété de la quatrième interface (I4), dans lequel la propriété comprend une capacité de longueur d'onde prise en charge par liaison, des informations de bande passante de ressources, un état de liaison et un dommage optique ;
l'information (502), par l'élément de réseau optique (NE1), au moyen d'un acheminement par inondation en utilisant le routage, de tous les éléments de réseau optique sur le réseau optique sur lequel l'élément de réseau optique (NE1) est situé, de la propriété de la quatrième interface (I4) ;
la réception (503), par l'élément de réseau optique (NE1), d'informations de routage transportées dans une signalisation étendue au moyen d'un objet ERO dans un protocole RSVP, dans lequel la route est obtenue au moyen d'un calcul par le premier noeud de service ou le serveur de calcul de route selon la propriété de la quatrième interface (I4), et la signalisation étendue comprend au moins l'identifiant de noeud, NODEID, l'indice de la deuxième interface (I2), l'indice de la première interface (I1), un indice de la quatrième interface (I4), une longueur d'onde de direction amont (λ2) de la deuxième interface (I2), et une longueur d'onde de direction aval (λ1) dans la première interface (I1) de l'élément de réseau optique (NE1) ;
l'établissement (504), par l'élément de réseau optique (NE1), d'une première connexion de longueur d'onde locale dans une seconde direction selon l'indice de la deuxième interface (I2), la longueur d'onde de direction amont (λ2) de la deuxième interface (I2), et l'indice de la quatrième interface (I4) qui sont compris dans la signalisation étendue, et l'établissement d'une seconde connexion de longueur d'onde locale dans la seconde direction selon l'indice de la quatrième interface (I4), l'indice de la première interface (I1), et la longueur d'onde de direction aval (λ1) de la première interface (I1) qui sont compris dans la signalisation étendue, dans lequel la seconde direction est une direction allant d'une direction amont de la deuxième interface (I2) à une direction aval de la première interface (I1) ; et
la distribution (505), par l'élément de réseau optique (NE1), d'un message, dans lequel le message comprend au moins le NODEID, l'indice de la quatrième interface (I4), une longueur d'onde de direction aval (λ2) de la quatrième interface (I4), et une longueur d'onde de direction amont (λ1) de la quatrième interface (I4) de l'élément de réseau optique (NE1), ou dans lequel le message comprend le NODEID, un indice de la sixième interface (I6), une longueur d'onde de direction amont (λ2) de la sixième interface (I6), et une longueur d'onde de direction aval (λ1) de la sixième interface (I6) de l'élément de réseau électrique (NE2), de sorte que l'élément de réseau électrique (NE2) établisse une connexion de longueur d'onde de la longueur d'onde de direction amont (λ2) de la sixième interface (I6) à la longueur d'onde de direction aval (λ1) de la sixième interface (I6) selon le message.

3. Procédé d'établissement de signalisation destiné à être utilisé dans un système comprenant un élément de réseau optique (NE1) et un élément de réseau électrique (NE2), dans lequel l'élément de réseau optique (NE1) comprend une première interface (I1), une deuxième interface (I2) et une troisième interface (I3), chaque interface (I1, I2, I3) de l'élément de réseau optique (NE1) comprend un diviseur et un combinateur, l'élément de réseau électrique (NE2) comprend une cinquième interface (I5) d'un régénérateur électrique de l'élément de réseau électrique (NE2), et le procédé comprend les étapes suivantes :
la réception (601), par l'élément de réseau électrique (NE2), d'un message distribué par un élément de réseau optique (NE1) ; et
l'établissement (602), par l'élément de réseau électrique (NE2) selon le message, d'une connexion de longueur d'onde locale allant d'une longueur d'onde de direction amont (λ1) de la cinquième interface (I5) à une longueur d'onde de direction aval (λ2) de la cinquième interface (I5) pour l'élément de réseau électrique (NE2) dans une première direction, dans lequel le message comprend au moins un identifiant de noeud, NODEID, un indice d'une troisième interface (I3), dans lequel le combinateur de la troisième interface (I3) fournit une interface amont de l'élément de réseau optique (NE1) et le diviseur de la troisième interface (I3) fournit une interface aval de l'élément de réseau optique (NE1) pour une communication avec la cinquième interface (I5), une longueur d'onde de direction amont (λ2) de la troisième interface (I3), et une longueur d'onde de direction aval (λ1) de la troisième interface (I3) de l'élément de réseau optique (NE1), ou dans lequel le message comprend un identifiant de noeud, NODEID, un indice de la cinquième interface (I5), la longueur d'onde de direction amont (λ1) de la cinquième interface (I5), et la longueur d'onde de direction aval (λ2) de la cinquième interface (I5) de l'élément de réseau électrique (NE2), et la première direction est une direction allant d'une direction amont de la cinquième interface (I5) à une direction aval de la cinquième interface (I5).

4. Procédé selon la revendication 3, dans lequel l'établissement (602), par l'élément de réseau électrique (NE2) selon le message, d'une connexion de longueur d'onde locale pour l'élément de réseau électrique (NE2) dans une première direction comprend :
lorsque le message comprend le NODEID, la longueur d'onde de direction amont (λ2) de la troisième interface (I3), la longueur d'onde de direction aval (λ1) de la troisième interface (I3), et l'indice de la troisième interface (I3) de l'élément de réseau optique (NE1), la constatation, par l'élément de réseau électrique (NE2) selon le NODEID et l'indice de la troisième interface (I3) de l'élément de réseau optique (NE1) et qui sont transportés dans le message, de l'indice de la cinquième interface (I5) de l'élément de réseau électrique (NE2), dans lequel une condition pour la constatation est que la cinquième interface (I5) soit une interface à distance de la troisième interface (I3) ; et
l'établissement de la connexion de longueur d'onde locale pour l'élément de réseau électrique (NE2) dans la première direction selon l'indice de la cinquième interface (I5), la longueur d'onde de direction amont (λ2) de la troisième interface (I3) et la longueur d'onde de direction aval (λ1) de la troisième interface (I3).

5. Procédé selon l'une quelconque des revendications 3 ou 4, dans lequel l'élément de réseau optique (NE1) comprend une quatrième interface (I4), la quatrième interface de l'élément de réseau optique (NE1) comprend un diviseur et un combinateur, l'élément de réseau électrique (NE2) comprend une sixième interface (I6) du régénérateur électrique de l'élément de réseau électrique (NE2), et le procédé comprend en outre les étapes suivantes :
la réception, par l'élément de réseau électrique (NE2), d'un message distribué par l'élément de réseau optique (NE1) ; et
l'établissement, par l'élément de réseau électrique (NE2), selon le message, d'une connexion de longueur d'onde locale allant d'une longueur d'onde de direction amont (λ2) de la sixième interface (I6) à une longueur d'onde de direction aval (λ1) de la sixième interface (I6) pour l'élément de réseau électrique (NE2) dans une seconde direction, dans lequel le message comprend au moins le NODEID, un indice de la quatrième interface (14), une longueur d'onde de direction aval (λ2) de la quatrième interface (14), et une longueur d'onde de direction amont (λ1) de la quatrième interface (14) de l'élément de réseau optique (NE1), ou dans lequel le message comprend le NODEID, un indice d'une sixième interface (16), une longueur d'onde de direction amont (λ2) de la sixième interface (16), et une longueur d'onde de direction aval (λ1) de la sixième interface (16) de l'élément de réseau électrique (NE2).

6. Elément de réseau optique (NE1) destiné à être utilisé dans un système comprenant l'élément de réseau optique (NE1) et un élément de réseau électrique (NE2), dans lequel l'élément de réseau optique (NE1) comprend une première interface (I1), une deuxième interface (12) et une troisième interface (13), chaque interface (I1, I2, I3) de l'élément de réseau optique (NE1) comprend un diviseur et un combinateur, et l'élément de réseau électrique (NE2) comprend une cinquième interface (15) d'un régénérateur électrique de l'élément de réseau électrique (NE2), dans lequel l'élément de réseau optique (NE1) comprend en outre :
une première unité de mise en correspondance (701), dans lequel la première unité de mise en correspondance (701) comprend :
une unité de configuration et de découverte (801), configurée pour permettre à l'élément de réseau optique (NE1) de configurer la cinquième interface (15) en tant qu'interface à distance de la troisième interface (13), ou découvrir automatiquement, en utilisant le protocole de gestion de liaison, LMP, que la cinquième interface (15) est une interface à distance de la troisième interface (13) ;
une unité de réception (802), configurée pour permettre à l'élément de réseau optique (NE1) de recevoir une propriété de la cinquième interface (15) qui est envoyée par l'élément de réseau électrique (NE2) en utilisant le protocole LMP ; et
une unité de mise en correspondance (803), configurée pour permettre à l'élément de réseau optique (NE1) de mettre en correspondance la propriété reçue de la cinquième interface (15) avec une propriété d'une troisième interface (13), dans lequel la propriété comprend une capacité de longueur d'onde prise en charge par liaison, des informations de bande passante de ressources, un état de liaison et un dommage optique ;
une première unité d'acheminement par inondation par routage (702), configurée pour permettre à l'élément de réseau optique d'informer, au moyen d'un acheminement par inondation en utilisant le routage, tous les éléments de réseau optique sur un réseau optique sur lequel l'élément de réseau optique (NE1) est situé, de la propriété de la troisième interface (13) ;
une première unité de réception de signalisation (703), configurée pour permettre à l'élément de réseau optique de recevoir des informations de routage transportées dans une signalisation étendue au moyen d'un objet de route explicite, ERO, dans un protocole de réservation de ressources, RSVP, dans lequel une route est obtenue au moyen d'un calcul par un premier noeud de service ou un serveur de calcul de route selon toutes les ressources et les topologies du réseau, dans lequel toutes les ressources et les topologies du réseau comprennent la propriété de la troisième interface (13), et dans lequel les informations de routage transportées dans la signalisation étendue comprennent au moins un identifiant de noeud, un indice d'une première interface (I1), un indice d'une deuxième interface (12), un indice de la troisième interface (13), une longueur d'onde de direction amont (λ1) de la première interface (I1), et une longueur d'onde de direction aval (λ2) de la deuxième interface (12) de l'élément de réseau optique (NE1) ;
une première unité d'établissement (704), configurée pour permettre à l'élément de réseau optique (NE1) : d'établir une première connexion de longueur d'onde locale dans une première direction selon l'indice de la première interface (I1), la longueur d'onde de direction amont (λ1) de la première interface (I1), et l'indice de la troisième interface (13) qui sont compris dans la signalisation étendue, dans lequel la première connexion de longueur d'onde locale est connectée de la première interface (I1) à la troisième interface (13) en utilisant la longueur d'onde amont (λ1) de la première interface (I1) ; et d'établir une seconde connexion de longueur d'onde locale dans la première direction selon l'indice de la troisième interface (13), l'indice de la deuxième interface (12), et la longueur d'onde aval (λ2) de la deuxième interface (12) qui sont compris dans la signalisation étendue, dans lequel la seconde connexion de longueur d'onde locale est connectée de la troisième interface (13) à la deuxième interface (12) en utilisant la longueur d'onde aval (λ2) de la deuxième interface (12), et la première direction est une direction allant d'une direction amont de la première interface (I1) à une direction aval de la deuxième interface (12) ; et
une première unité de distribution (705), configurée pour permettre à l'élément de réseau optique (NE1) de distribuer un message à l'élément de réseau électrique (NE2), dans lequel le message comprend au moins un identifiant de noeud, NODEID, l'indice de la troisième interface (13), une longueur d'onde de direction amont (λ1) de la troisième interface (13), et une longueur d'onde de direction aval (λ2) de la troisième interface (13) de l'élément de réseau optique, ou dans lequel le message comprend un identifiant de noeud, NODEID, un indice de la cinquième interface (15), une longueur d'onde de direction amont (λ1) de la cinquième interface (15), et une longueur d'onde de direction aval (λ2) de la cinquième interface (15) de l'élément de réseau électrique (NE2), de sorte que l'élément de réseau électrique (NE2) établisse une connexion de longueur d'onde locale allant de la longueur d'onde de direction amont (λ1) de la cinquième interface (15) à la longueur d'onde de direction aval (λ2) de la cinquième interface (15) selon le message.

7. Elément de réseau optique (NE1) selon la revendication 6, dans lequel l'élément de réseau optique (NE1) comprend une quatrième interface (14), la quatrième interface de l'élément de réseau optique (NE1) comprend un diviseur et un combinateur, l'élément de réseau électrique (NE2) comprend une sixième interface (16) du régénérateur électrique de l'élément de réseau électrique (NE2), et l'élément de réseau optique (NE1) comprend en outre :
une seconde unité de mise en correspondance (901), dans lequel la seconde unité de mise en correspondance (901) comprend :
une seconde unité de configuration et de découverte, configurée pour permettre à l'élément de réseau optique (NE1) de configurer la sixième interface (16) en tant qu'interface à distance de la quatrième interface (14), ou de découvrir automatiquement, en utilisant le protocole de gestion de liaison, LMP, que la sixième interface (16) est une interface à distance de la quatrième interface (14) ;
une seconde unité de réception, configurée pour permettre à l'élément de réseau optique (NE1) de recevoir une propriété de la sixième interface (16) qui est envoyée par l'élément de réseau électrique (NE2) en utilisant le protocole LMP ; et
une seconde unité de mise en correspondance configurée pour permettre à l'élément de réseau optique (NE1) de mettre en correspondance une propriété d'une sixième interface (16) avec une propriété d'une quatrième interface (14), dans lequel la propriété comprend une capacité de longueur d'onde prise en charge par liaison, des informations de bande passante de ressources, un état de liaison et un dommage optique ;
une seconde unité d'acheminement par inondation par routage (902), configurée pour permettre à l'élément de réseau optique (NE1), d'informer, au moyen d'un acheminement par inondation en utilisant le routage, tous les éléments de réseau optique sur le réseau optique sur lequel l'élément de réseau optique (NE1) est situé, de la propriété de la quatrième interface (14) ;
une seconde unité de réception de signalisation (903), configurée pour permettre à l'élément de réseau optique (NE1) de recevoir des informations de routage transportées dans une signalisation étendue au moyen d'un objet ERO dans un protocole RSVP, dans lequel la route est obtenue au moyen d'un calcul par le premier noeud de service ou le serveur de calcul de route selon la propriété de la quatrième interface (14), et la signalisation étendue comprend au moins l'identifiant de noeud, NODEID, l'indice de la deuxième interface (12), l'indice de la première interface (I1), un indice de la quatrième interface (14), une longueur d'onde de direction amont (λ2) de la deuxième interface (12), et une longueur d'onde de direction aval (λ1) de la première interface (I1) de l'élément de réseau optique (NE1) ;
une deuxième unité d'établissement (904), configurée pour permettre à l'élément de réseau optique (NE1) : d'établir une première connexion de longueur d'onde locale dans une seconde direction selon l'indice de la deuxième interface (12), la longueur d'onde amont (λ2) de la deuxième interface (12), et l'indice de la quatrième interface (14) qui sont compris dans la signalisation étendue ; et d'établir une seconde connexion de longueur d'onde locale dans la seconde direction selon l'indice de la quatrième interface (14), l'indice de la première interface (I1), et la longueur d'onde aval (λ1) de la première interface (I1) qui sont compris dans la signalisation étendue, dans lequel la seconde direction est une direction allant d'une direction amont de la deuxième interface (12) à une direction aval de la première interface (I1) ; et
une seconde unité de distribution (905), configurée pour permettre à l'élément de réseau optique (NE1) de distribuer un message, dans lequel le message comprend au moins le NODEID, l'indice de la quatrième interface (14), une longueur d'onde de direction aval (λ2) de la quatrième interface (14), une longueur d'onde de direction amont (λ1) de la quatrième interface (14) de l'élément de réseau optique (NE1), ou dans lequel le message comprend le NODEID, un indice de la sixième interface (16), une longueur d'onde de direction amont (λ2) de la sixième interface (16), et une longueur d'onde de direction aval (λ1) de la sixième interface (16) de l'élément de réseau électrique (NE2), de sorte que l'élément de réseau électrique (NE2) établisse une connexion de longueur d'onde allant de la longueur d'onde de direction amont (λ2) de la sixième interface (16) à la longueur d'onde de direction aval (λ1) de la sixième interface (16) selon le message.

8. Elément de réseau électrique (NE2) destiné à être utilisé dans un système comprenant un élément de réseau optique (NE1) et l'élément de réseau électrique (NE2), dans lequel l'élément de réseau optique (NE1) comprend une première interface (I1), une deuxième interface (12) et une troisième interface (13), chaque interface (I1, I2, I3) de l'élément de réseau optique (NE1) comprend un diviseur et un combinateur, l'élément de réseau électrique (NE2) comprend une cinquième interface (15) d'un régénérateur électrique de l'élément de réseau électrique (NE2), et, dans lequel l'élément de réseau électrique (NE2) comprend en outre :
une première unité de réception de message (1001), configurée pour permettre à l'élément de réseau électrique (NE2) de recevoir un message distribué par un élément de réseau optique (NE1) ; et
une troisième unité d'établissement (1002), configurée pour permettre à l'élément de réseau électrique (NE2) d'établir, selon le message, une connexion de longueur d'onde locale allant d'une longueur d'onde de direction amont (λ1) de la cinquième interface (15) à une longueur d'onde de direction aval (λ2) de la cinquième interface (15) pour l'élément de réseau électrique (NE2) dans une première direction, dans lequel le message comprend au moins un identifiant de noeud, NODEID, un indice d'une troisième interface (13), dans lequel le combinateur de la troisième interface (13) fournit une interface amont de l'élément de réseau optique (NE1) et le diviseur de la troisième interface (13) fournit une interface aval de l'élément de réseau optique (NE1) pour une communication avec la cinquième interface (15), une longueur d'onde de direction amont (λ2) de la troisième interface (13), et une longueur d'onde de direction aval (λ1) de la troisième interface (13) de l'élément de réseau optique (NE1), ou dans lequel le message comprend un identifiant de noeud NODEID, un indice de la cinquième interface (15), une longueur d'onde de direction amont (λ1) de la cinquième interface (15), et une longueur d'onde de direction aval (λ2) de la cinquième interface (15) de l'élément de réseau électrique (NE2), et la première direction est une direction allant d'une direction amont de la cinquième interface (15) à une direction aval de la cinquième interface (I5).

9. Elément de réseau électrique (NE2) selon la revendication 8, dans lequel la troisième unité d'établissement (1002) est spécifiquement configurée pour :
lorsque le message comprend le NODEID, la longueur d'onde de direction amont (λ2) de la troisième interface (13), la longueur d'onde de direction aval (λ1) de la troisième interface (13), et l'indice de la troisième interface (13) de l'élément de réseau optique (NE1), permettre à l'élément de réseau électrique (NE2) de constater, selon le NODEID et l'indice de la troisième interface (13) de l'élément de réseau optique (NE1) et qui sont transportés dans le message, l'indice de la cinquième interface (15) de l'élément de réseau électrique (NE2), dans lequel une condition pour la constatation est que la cinquième interface (15) soit une interface à distance de la troisième interface (13) ; et
établir, selon l'indice de la cinquième interface (15), la longueur d'onde de direction amont (λ2) de la troisième interface (13), et la longueur d'onde de direction aval (λ1) de la troisième interface (13), la connexion de longueur d'onde locale pour l'élément de réseau électrique (NE2) dans la première direction.

10. Elément de réseau électrique (NE2) selon l'une quelconque des revendications 8 et 9, dans lequel l'élément de réseau optique (NE1) comprend une quatrième interface (14), la quatrième interface de l'élément de réseau optique (NE1) comprend un diviseur et un combinateur, l'élément de réseau électrique (NE2) comprend une sixième interface (16) du régénérateur électrique de l'élément de réseau électrique (NE2), et l'élément de réseau électrique (NE2) comprend en outre :
une seconde unité de réception de message, configurée pour permettre à l'élément de réseau électrique (NE2) de recevoir un message distribué par l'élément de réseau optique (NE1) ; et
une quatrième unité d'établissement, configurée pour permettre à l'élément de réseau électrique (NE2) d'établir, selon le message, une connexion de longueur d'onde locale allant d'une longueur d'onde de direction amont (λ2) de la sixième interface (16) à une longueur d'onde de direction aval (λ1) de la sixième interface (16) pour l'élément de réseau électrique (NE2) dans une seconde direction, dans lequel le message comprend au moins le NODEID, un indice de la quatrième interface (14), une longueur d'onde de direction aval (λ2) de la quatrième interface (14), et une longueur d'onde de direction amont (λ1) de la quatrième interface (14) de l'élément de réseau optique (NE1), ou dans lequel le message comprend le NODEID, un indice d'une sixième interface (16), une longueur d'onde de direction amont (λ2) de la sixième interface (16), et une longueur d'onde de direction aval (λ1) de la sixième interface (16) de l'élément de réseau électrique (NE2).
